# EUROPEAN PATENT APPLICATION

(11) **EP 4 276 495 A1**
(43) Date of publication of application: **15.11.2023**
(21) Application number: 21923679.1
(22) Date of filing: 02.02.2021
(51) Int. Cl.: G01S 17/88, G01S 7/481, G01S 7/483

(54) **DETECTION DEVICE, CONTROL METHOD, FUSION DETECTION SYSTEM, AND TERMINAL**

(71) Applicant: Huawei Technologies Co., Ltd., Shenzhen, Guangdong 518129 (CN)
(72) Inventor: LV, Xiaoyu, Shenzhen, Guangdong 518129 (CN); LUO, Daxin, Shenzhen, Guangdong 518129 (CN); LIN, Yongbing, Shenzhen, Guangdong 518129 (CN); MA, Sha, Shenzhen, Guangdong 518129 (CN)
(74) Representative: Pfenning, Meinig & Partner mbB
(86) International application number: PCT/CN2021/074937
(87) International publication number: WO 2022/165650

(57) **Abstract**

Embodiments of this application provide a detection apparatus, a control method, a fusion detection system, and a terminal, relate to a fusion perception technology, and may be applied to the field of autonomous driving or intelligent driving. The detection apparatus includes a laser emitting unit, a laser detection unit, a beam splitting apparatus, and an image detection unit. The laser emitting unit is configured to emit a laser signal. A first laser signal from the laser emitting unit is transmitted to a detection area through the beam splitting apparatus. The laser detection unit is configured to receive a first signal from a first target object in the detection area through the beam splitting apparatus. The first signal includes a reflected signal corresponding to the first laser signal. The beam splitting apparatus is further configured to provide a second signal from the first target object in the detection area for the image detection unit. The image detection unit is configured to perform imaging by using the second signal. This application provides a fusion detection apparatus with high integration, to improve accuracy of a detection result and reduce computational complexity.

## Description

### TECHNICAL FIELD

This application relates to radar technologies, and is applied to the field of fusion perception of autonomous driving or intelligent driving, and in particular, to a detection apparatus, a control method, a fusion detection system, and a terminal.

### BACKGROUND

With the development of society, intelligent vehicles are gradually entering people's daily lives. An advanced driver assistance system (Advanced Driver Assistance System, ADAS) plays a very important role in the intelligent vehicles. The ADAS system uses various sensors installed on a vehicle to sense an ambient environment, collect data, and identify, detect, and trace a still object and a moving object in a driving process of the vehicle, and the ADAS system performs a system operation and system analysis based on map data of a navigator, so that a driver detects a potential danger in advance, thereby effectively increasing driving comfort and safety of the vehicle. In conclusion, in an intelligent vehicle, a sensor plays a very important role in assisted driving and autonomous driving of the intelligent vehicle, and a sensing layer is used as an "eye" of the vehicle, including a visual sensor such as a vehicle-mounted camera and a radar sensor such as a vehicle-mounted lidar and a vehicle-mounted ultrasonic radar. The lidar has comparatively high resolution, good detection performance, and strong concealment, and is one of important sensors in vehicle sensing.

However, compared with an image obtained by using a camera, a detection result obtained by the lidar still has lower resolution, and image-level high-resolution information of a detected target cannot be obtained. This restricts actual application of the lidar. However, a camera sensor usually can capture an image with higher resolution. The lidar and the camera are fused to perform depth completion, so that spatial resolution of the lidar can be effectively improved. This is an important development direction in the autonomous driving field. Specifically, the lidar may obtain point cloud data through detection, and the camera sensor may obtain image data through photographing. After calibration and field-of-view registration are performed on the point cloud data and the image data by using a fusion technology, data fusion is performed to obtain a detection result. However, in a fusion detection process, the lidar and the camera have problems such as a large size, low integration, and complex registration, which affect detection quality.

Therefore, how to resolve the foregoing problem is a research focus of a person skilled in the art.

### SUMMARY

Embodiments of this application disclose a detection apparatus, a control method, a fusion detection system, and a terminal. This application provides a fusion detection apparatus with high integration, to improve accuracy of a detection result and reduce computational complexity.

According to a first aspect, an embodiment of this application discloses a detection apparatus. The detection apparatus includes a laser emitting unit, a laser detection unit, a beam splitting apparatus, and an image detection unit.

The laser emitting unit is configured to emit a laser signal. A first laser signal from the laser emitting unit is transmitted to a detection area through the beam splitting apparatus.

The laser detection unit is configured to receive a first signal from the detection area through the beam splitting apparatus. The first signal includes a reflected signal corresponding to the first laser signal.

The beam splitting apparatus is further configured to provide a second signal from the detection area for the image detection unit.

The image detection unit is configured to perform imaging by using the second signal. Specifically, the first signal and/or the second signal may be from a first target object in the detection area.

In this embodiment of this application, the laser emitting unit, the laser detection unit, and the image detection unit are integrated into one detection apparatus. This improves integration and reduces an overall size, and reduces impact caused by motion, vibration, and the like on a detection result. Further, in this embodiment of this application, optical paths of the laser signal, the first signal, and the second signal can be coaxial through the beam splitting apparatus. The laser detection unit can correspondingly receive a laser signal reflected by the detection area irradiated by the laser emitting unit, thereby improving accuracy of the detection result. In addition, the image detection unit and the laser detection unit synchronously obtain point cloud information and image information of the detection area, to facilitate subsequent fusion of the point cloud information and the image information that are of a lidar, and therefore complex calibration, registration, and the like do not need to be performed during fusion, and computational complexity is reduced.

With reference to the first aspect, in a possible implementation of the first aspect, the laser emitting unit includes a flash (flash) light source. Further optionally, the laser emitting unit may be a flash array light source and a flash flood light source.

The flash light source can irradiate one field of view at a time, and can achieve an effect of surface irradiation. An array light source can irradiate to obtain an illumination lattice, and can provide a uniform irradiation field of view, thereby improving detection effect. In addition, the array light source has higher energy utilization.

With reference to the first aspect, in another possible implementation of the first aspect, the beam splitting apparatus includes a first beam splitting apparatus and a second beam splitting apparatus.

The first beam splitting apparatus is configured to transmit the laser signal to the second beam splitting apparatus.

The second beam splitting apparatus is configured to transmit the laser signal to the detection area.

The second beam splitting apparatus is further configured to split an optical signal from the detection area into the first signal and the second signal, provide the second signal for the image detection unit, and provide the first signal for the first beam splitting apparatus.

The first beam splitting apparatus is further configured to provide the first signal for the laser detection unit.

With reference to the first aspect, in another possible implementation of the first aspect, the first beam splitting apparatus is a polarization beam splitter or a semi-transmissive semi-reflective beam splitter.

The polarization beam splitter can split polarized incident light into two beams of polarized light for transmission.

Further, the laser emitting unit and the laser detection unit may be coaxial through the polarization beam splitter. For example, the laser signal emitted by the laser emitting unit is in a first polarization direction, and may be provided for the detection area after passing through the polarization beam splitter. A polarization direction of an optical signal from the detection area may be changed by using another optical device. After passing through the polarization beam splitter, the optical signal whose polarization direction is changed is provided for the laser detection unit, and is not transmitted to (or a small part of the optical signal is transmitted to) the laser emitting unit (or most of the optical signal is provided for the laser detection unit, and a small part of the optical signal is absorbed or transmitted to another direction). Therefore, the laser emitting unit and the laser detection unit can be coaxial, and a loss of an echo signal can be reduced.

Alternatively, the semi-transmissive semi-reflective beam splitter can split, within a specific wavelength range, one beam of light into two beams of light whose spectral components are approximately the same, and can also enable the laser emitting unit and the laser detection unit to be coaxial.

With reference to the first aspect, in another possible implementation of the first aspect, a wavelength range of the first laser signal falls inside a first wavelength range, the first signal includes an optical signal whose wavelength range falls inside the first wavelength range, and the second signal includes an optical signal whose wavelength range falls inside a second wavelength range. Further, the first wavelength range is different from the second wavelength range.

A possible case is used as an example herein: The laser emitting unit may emit infrared light (for example, a mid-infrared ray at a wavelength of 3 µm to 5 µm), the laser detection unit may respond to the infrared light, and the image detection unit may respond to visible light. The second beam splitting apparatus is configured to split the optical signal from the detection area into the first signal and the second signal, where the first signal includes an optical signal whose wavelength range falls inside a wavelength range of the infrared light, and the second signal includes an optical signal whose wavelength range falls inside a wavelength range of the visible light, so that the laser detection unit receives the infrared light (including reflected light obtained based on the emitted infrared light), and subsequently obtains point cloud information based on the received infrared light. The image detection unit receives the visible light, performs imaging, and subsequently obtains image information.

With reference to the first aspect, in another possible implementation of the first aspect, the second beam splitting apparatus is a dichroic beam splitter or a semi-transmissive semi-reflective beam splitter.

The dichroscope may split the optical signal from the detection area into two parts of signals. The first signal includes a signal at a wavelength range required by the laser detection unit, and the second signal includes a signal at a wavelength range required by the image detection unit.

A possible case is used as an example herein: The laser emitting unit may emit infrared light (for example, a mid-infrared ray at a wavelength of 3 µm to 5 µm), the laser detection unit may respond to the infrared light, and the image detection unit is an image sensor for imaging with visible light. The second beam splitting apparatus is configured to split the optical signal from the detection area into the first signal and the second signal. Most signals included in the first signal are optical signals whose wavelength ranges are greater than 800 nm, and most signals included in the second signal are optical signals whose wavelength ranges are less than 750nm. Therefore, the first signal includes a reflected signal corresponding to an emitted laser signal, and the second signal includes the visible light. The first signal is provided for the laser detection unit, and the second signal is provided for the image detection unit, so that the two detection units respectively obtain valid optical signals, thereby improving signal utilization.

Alternatively, the semi-transmissive semi-reflective beam splitter can split, within a specific wavelength range, one beam of light into two beams of light whose spectral components are approximately the same. In this case, the laser detection unit, the laser emitting unit, and the image detection unit may operate in a same band.

With reference to the first aspect, in another possible implementation of the first aspect, the first beam splitting apparatus includes a polarization beam splitter and a wave plate, and the wave plate is disposed between the polarization beam splitter and the second beam splitting apparatus. Optionally, the wave plate may be a quarter-wave plate, an eighth-wave plate, or the like.

The wave plate may be configured to change a polarization state of passing light, so that a polarization state of the optical signal emitted by the laser emitting unit is different from a polarization state of the optical signal from the detection area. The wave plate may be used with the polarization beam splitter to allow the laser emitting unit and the laser detection unit to be coaxial.

With reference to the first aspect, in another possible implementation of the first aspect, a polarizer is disposed between the laser emitting unit and the beam splitting apparatus, and a polarization direction of a laser signal passing through the polarizer is a first polarization direction.

For example, an optical signal from the laser detection unit is non-polarized light, and the non-polarized light is linearly polarized light after passing through the polarizer. P-polarized light (or S-polarized light) may be obtained when the polarized light passes through the polarization beam splitter, and is subsequently provided for the detection area. The polarizer may be used with the polarization beam splitter and the wave plate to allow optical signals of the laser emitting unit, the laser detection unit, and the image detection unit to be coaxial, to reduce an optical signal loss.

With reference to the first aspect, in another possible implementation of the first aspect, the laser emitting unit is configured with a first polarization film coating, and a polarization direction of a laser signal passing through the polarization film coating is a first polarization direction.

It can be learned that the polarized light is emitted through a polarization film coating, so that a structure of the detection apparatus is further compact, impact caused by motion, vibration, and the like on fusion detection can be reduced, and stability can be improved.

With reference to the first aspect, in another possible implementation of the first aspect, the laser detection unit is configured with a second polarization film coating, and the second polarization film coating is configured to transmit a signal whose polarization direction is a preset polarization direction in the first signal. In this manner, a light filtering effect can be achieved, and signal validity can be improved.

With reference to the first aspect, in another possible implementation of the first aspect, the image detection unit includes at least one of a color camera, a grayscale camera, or a multidimensional camera, and the multidimensional camera includes at least one of a grayscale polarization camera, a color polarization camera, and a multispectral polarization camera.

The multidimensional camera may obtain more information about the detection area in original dimensions such as energy strength and a wavelength of an optical signal in combination with another dimension (another attribute of light, for example, one or more of a polarization direction of light and energy density of light).

With reference to the first aspect, in another possible implementation of the first aspect, the apparatus further includes a controller, and the controller is configured to control at least one of the laser emitting unit, the image detection unit, or the laser detection unit.

In a design, the controller may generate a control signal and send the control signal to at least one unit in the detection apparatus, to control the at least one unit. For example, the controller may send a first control signal to the laser emitting unit, and the laser emitting unit generates a laser signal in response to the first control signal. For another example, the controller may further send a second control signal to the laser detection unit, to control the laser detection unit to convert an optical signal into an electrical signal.

With reference to the first aspect, in another possible implementation of the first aspect, in the detection apparatus, a center point of a laser emission field of view, a center point of a laser detection field of view, and a center point of an image detection field of view overlap with each other.

The laser emission field of view is an area that can be irradiated by the laser signal emitted by the laser emitting unit, the laser detection field of view is an area that can be detected by the laser detection unit, and the image detection field of view is an area that can be detected by the image detection unit.

It may be understood that a point corresponding to a principal optical axis is a center point of a field of view. Because the optical paths of the laser signal, the first signal, and the second signal are coaxial, the center point of the laser emission field of view, the center point of the laser detection field of view, and the center point of the image detection field of view in the detection apparatus overlap with each other. It should be noted that the overlapping herein means that the center points of the fields of view are also coaxial because the optical paths are coaxial, but the center points are not necessarily precisely overlapping. For example, the overlapping may be not necessarily accurate due to different process designs. However, the method in this application can reduce complexity of registration and calibration as much as possible.

When the center points overlap, the laser detection unit may correspondingly receive an optical signal returned by the area irradiated by the laser emitting unit, thereby improving accuracy of a laser detection result.

If the laser detection field of view overlaps with the image detection field of view, complexity of registration and calibration during subsequent fusion can be reduced (for example, no extrinsic parameter calibration is required), computation consumption can be reduced, and efficiency of obtaining a detection result can be improved.

In addition, if the image detection unit supports operating in a laser illumination mode, the laser emitting unit and the image detection unit are coaxial, so that an imaging effect of the image detection unit can be further improved.

With reference to the first aspect, in another possible implementation of the first aspect, the laser detection unit is configured to obtain first detection data based on the first signal. Further, the first detection data is used to generate point cloud information of the detection area.

Optionally, the laser detection unit may obtain an electrical signal based on the first signal. The first detection data may include the electrical signal or further data obtained after the electrical signal is processed.

Further optionally, the first detection data is the point cloud information, or the point cloud information may be obtained by processing the first detection data. The point cloud information may be used to obtain information such as a distance, a speed, a reflectivity, and reflection intensity of the detection area.

With reference to the first aspect, in another possible implementation of the first aspect, the image detection unit is configured to obtain second detection data based on the second signal. Further, the second detection data is used to generate image information of the detection area.

Specifically, the image detection unit may obtain pixel information (or an electrical signal) based on the second signal. The second detection data may include the pixel information or further data obtained after the pixel information is processed.

Further optionally, the second detection data includes the image information, or the image information may be obtained by processing the second detection data. The image information may be used to obtain a color, a pattern, a point of interest, or the like of the detection area, or may be used to analyze and identify the detection area.

With reference to the first aspect, in another possible implementation of the first aspect, the apparatus further includes a processing apparatus, and the processing apparatus is configured to fuse the first detection data and the second detection data to obtain a detection result of the detection area.

Optionally, the detection result of the detection area may be a high-resolution fused image of the detection area, or a 3D image of the detection area. Based on the detection result, a distance of an object in the detection area may be determined, and object recognition, analysis, and the like may be performed by using a high-resolution pixel.

Optionally, the processing apparatus and the foregoing controller may be integrated or independent. It may also be understood that the processing apparatus may be located in a lidar, and the lidar implements fusion processing; or the processing apparatus may be located outside the lidar, and an external processing apparatus implements fusion processing.

With reference to the first aspect, in another possible implementation of the first aspect, the apparatus further includes an optical device, and the optical device includes at least one of a lens, a filter, a beam shaper, and a light uniformizer.

With reference to the first aspect, in another possible implementation of the first aspect, the apparatus further includes a first optical device, and the first optical device is disposed between the beam splitting apparatus and the detection area.

The first optical device is configured to transmit light within a third wavelength range, and the third wavelength range includes the wavelength range of the first laser signal and an operating wavelength range of the image detection unit. Optionally, the optical device may be specifically a lens or a filter.

During specific implementation, the first optical device may be a wide-spectrum optical device. The wide spectrum indicates that an optical signal with a large wavelength range can pass through the optical device. For example, in a scenario in which the laser emitting unit is infrared light, and the image detection unit responds to visible light, the wide-spectrum optical device can pass through at least a band in which the infrared light is located and a band in which the visible light is located, and can be reused during transceiving.

It can be learned that the wide-spectrum optical device can reuse optical systems of the laser emitting unit, the laser detection unit, and the image detection unit, to reduce a volume of the detection apparatus and improve compactness.

In addition, in some possible examples, because the laser detection unit and the image detection unit share a receiving optical device, synchronous zooming of laser detection and image detection can be implemented, thereby reducing complexity of registration and calibration during subsequent fusion, reducing computation consumption, and improving efficiency of obtaining a detection result.

With reference to the first aspect, in another possible implementation of the first aspect, the apparatus further includes at least one of a second optical device, a third optical device, and a fourth optical device.

The second optical device is disposed between the laser emitting unit and the beam splitting apparatus;
the third optical device is disposed between the laser detection unit and the beam splitting apparatus; and/or
the fourth optical device is disposed between the image detection unit and the beam splitting apparatus.

With reference to the first aspect, in another possible implementation of the first aspect, the apparatus further includes a fifth optical device and a sixth optical device.

The fifth optical device is disposed between the first beam splitting apparatus and the second beam splitting apparatus.

The sixth optical device is disposed between the image detection unit and the second beam splitting apparatus.

According to a second aspect, an embodiment of this application discloses a control method, including:
controlling a laser emitting unit to emit a first laser signal, where the first laser signal is transmitted to a detection area through a beam splitting apparatus;
controlling a laser detection unit to receive a first signal from the detection area, where the first signal is provided for the laser detection unit through the beam splitting apparatus, and the first signal includes a reflected signal corresponding to the first laser signal; and
controlling an image detection unit to receive a second signal from the detection area, where the second signal is provided for the image detection unit through the beam splitting apparatus.

It can be learned that, according to the foregoing control method, a detection apparatus can be controlled to detect the detection area, so that both laser detection and image detection can be performed on the detection area. The detection apparatus includes the laser emitting unit, the laser detection unit, and the image detection unit, and the device has high compactness and good stability. Further, in this embodiment of this application, optical paths of the laser signal, the first signal, and the second signal can be coaxial through the beam splitting apparatus. The image detection unit can correspondingly receive a laser signal reflected by the detection area irradiated by the laser emitting unit, thereby improving accuracy of a detection result. In addition, the image detection unit and the laser detection unit synchronously obtain point cloud information and image information of the detection area, to facilitate subsequent fusion of the point cloud information and the image information without performing complex calibration and registration, thereby reducing computational complexity, and improving resolution of the detection result.

With reference to the second aspect, in a possible implementation of the second aspect, the method further includes:
obtaining the point cloud information of the detection area based on first detection data from the laser detection unit;
obtaining the image information of the detection area based on second detection data from the image detection unit; and
fusing the point cloud information and the image information to obtain the detection result of the detection area.

Optionally, the detection result of the detection area may be a high-resolution fused image of the detection area, or a 3D image of the detection area. Based on the detection result, a distance of an object in the detection area may be determined, and object recognition, analysis, and the like may be performed by using a high-resolution pixel. It should be noted that "from" herein is not limited to "directly from" or "indirectly from". A person skilled in the art may understand that detection data used to obtain the point cloud information and the image information is from a corresponding detection unit.

With reference to the second aspect, in another possible implementation of the second aspect, the beam splitting apparatus specifically includes a first beam splitting apparatus and a second beam splitting apparatus.

The first laser signal is specifically transmitted to the detection area through the first beam splitting apparatus and the second beam splitting apparatus.

An optical signal from the detection area is split into the first signal and the second signal through the second beam splitting apparatus, the first signal is provided for the laser detection unit through the first beam splitting apparatus, and the second signal is provided for the image detection unit.

With reference to the second aspect, in another possible implementation of the second aspect, the first beam splitting apparatus includes a polarization beam splitter or a semi-transmissive semi-reflective beam splitter.

With reference to the second aspect, in another possible implementation of the second aspect, a wavelength range of the first laser signal falls inside a first wavelength range, the first signal includes an optical signal whose wavelength range falls inside the first wavelength range, and the second signal includes an optical signal whose wavelength range falls inside a second wavelength range. Further, the first wavelength range is different from the second wavelength range.

With reference to the second aspect, in another possible implementation of the second aspect, the second beam splitting apparatus includes a dichroic beam splitter or a semi-transmissive semi-reflective beam splitter.

With reference to the second aspect, in another possible implementation of the second aspect, the laser emitting unit includes a flash array light source.

With reference to the second aspect, in another possible implementation of the second aspect, the first beam splitting apparatus includes a polarization beam splitter and a wave plate, and the wave plate is disposed between the polarization beam splitter and the second beam splitting apparatus. Optionally, the wave plate may be a quarter-wave plate, an eighth-wave plate, or the like.

With reference to the second aspect, in another possible implementation of the second aspect, the laser emitting unit is configured with a first polarization film coating, and a polarization direction of a laser signal passing through the polarization film coating is a first polarization direction.

With reference to the second aspect, in another possible implementation of the second aspect, the laser emitting unit is specifically a flash array light source configured with the first polarization film coating, and the polarization direction of the laser signal passing through the polarization film coating is the first polarization direction.

With reference to the second aspect, in another possible implementation of the second aspect, the laser detection unit is configured with a second polarization film coating, and the second polarization film coating is configured to transmit a signal whose polarization direction is a preset polarization direction in the first signal.

With reference to the second aspect, in another possible implementation of the second aspect, the image detection unit includes at least one of a color camera, a grayscale camera, or a multidimensional camera, and the multidimensional camera includes at least one of a grayscale polarization camera, a color polarization camera, and a multispectral polarization camera.

With reference to the second aspect, in another possible implementation of the second aspect, the apparatus further includes an optical device, and the optical device includes at least one of a lens, a filter, a beam shaper, and a light uniformizer.

With reference to the second aspect, in another possible implementation of the second aspect, the apparatus further includes a first optical device, and the first optical device is disposed between the beam splitting apparatus and the detection area. Optionally, the first optical device may be a wide-spectrum optical device.

With reference to the second aspect, in another possible implementation of the second aspect, the apparatus further includes at least one of a second optical device, a third optical device, and a fourth optical device.

The second optical device is disposed between the laser emitting unit and the beam splitting apparatus;
the third optical device is disposed between the laser detection unit and the beam splitting apparatus; and/or
the fourth optical device is disposed between the image detection unit and the beam splitting apparatus.

With reference to the second aspect, in another possible implementation of the second aspect, the apparatus further includes a fifth optical device and a sixth optical device.

The fifth optical device is disposed between the first beam splitting apparatus and the second beam splitting apparatus.

The sixth optical device is disposed between the image detection unit and the second beam splitting apparatus.

According to a third aspect, an embodiment of this application provides a control apparatus, including a control unit. Optionally, the control apparatus further includes a processing unit. The control apparatus is configured to implement the method described in any one of the second aspect or the possible implementations of the second aspect. There may be one or more control units and processing units.

In a possible implementation, the control unit is configured to control a laser emitting unit to emit a first laser signal. The first laser signal is transmitted to a detection area through a beam splitting apparatus.

The control unit is further configured to control a laser detection unit to receive a first signal from the detection area. The first signal is provided for the laser detection unit through the beam splitting apparatus, and the first signal includes a reflected signal corresponding to the first laser signal.

The control unit is further configured to control an image detection unit to receive a second signal from the detection area. The second signal is provided for the image detection unit through the beam splitting apparatus.

With reference to the third aspect, in a possible implementation of the second aspect, the processing unit is configured to:
obtain point cloud information of the detection area based on first detection data from the laser detection unit;
obtain image information of the detection area based on second detection data from the image detection unit; and
fuse the point cloud information and the image information to obtain a detection result of the detection area.

According to a fourth aspect, an embodiment of this application discloses a control apparatus, including at least one processor and a communications interface. The communications interface is configured to provide an input and/or output for the at least one processor, and the processor is configured to execute a computer program to implement the method described in any one of the second aspect or the possible implementations of the second aspect.

According to a fifth aspect, an embodiment of this application discloses a fusion detection system. The fusion detection system processing apparatus includes a detection apparatus and a processing apparatus. The detection apparatus includes the apparatus described in any one of the first aspect or the possible implementations of the first aspect, and the processing apparatus is configured to execute a computer program to fuse first detection data and second detection data, to obtain a detection result of a detection area.

The first detection data comes from a laser detection unit of the detection apparatus, and the second detection data comes from an image detection unit of the detection apparatus.

According to a sixth aspect, an embodiment of this application discloses a terminal, and the terminal includes the detection apparatus described in any one of the first aspect or the possible implementations of the first aspect.

In a possible implementation of the sixth aspect, the terminal may be a transportation tool or an intelligent terminal such as a vehicle, an uncrewed aerial vehicle, a roadside unit, an intersection radar, or a robot.

According to a seventh aspect, an embodiment of this application discloses a computer-readable storage medium. The computer-readable storage medium stores a computer program. When the computer program is run on one or more processors, the method described in any one of the second aspect or the possible implementations of the second aspect is implemented.

According to an eighth aspect, an embodiment of this application discloses a computer program product. When the computer program product runs on one or more processors, the method described in any one of the second aspect or the possible implementations of the second aspect is implemented.

It should be noted that some possible implementations of the second aspect and the third aspect of this application have a same concept as some implementations of the first aspect. For beneficial effects brought by the possible implementations of the second aspect and the third aspect, refer to the beneficial effects of the first aspect. Therefore, details are not described again.

### BRIEF DESCRIPTION OF DRAWINGS

The following describes accompanying drawings used in embodiments of this application.
FIG. 1A is a schematic diagram of a structure of a detection apparatus according to an embodiment of this application;
FIG. 1B is a schematic diagram of a detection apparatus emitting a laser signal according to an embodiment of this application;
FIG. 1C is a schematic diagram of a detection apparatus receiving a signal according to an embodiment of this application;
FIG. 2 is a schematic diagram in which a laser emitting unit emits a laser signal according to an embodiment of this application;
FIG. 3 is a schematic diagram in which another laser emitting unit emits a laser signal according to an embodiment of this application;
FIG. 4 is a schematic diagram in which a laser detection unit receives a signal according to an embodiment of this application;
FIG. 5 is a schematic diagram of a structure of a multidimensional camera according to an embodiment of this application;
FIG. 6 is a schematic diagram of a laser emission field of view, a laser detection field of view, and an image detection field of view according to an embodiment of this application;
FIG. 7A is a schematic diagram of another detection apparatus emitting a laser signal according to an embodiment of this application;
FIG. 7B is a schematic diagram of another detection apparatus receiving a signal according to an embodiment of this application;
FIG. 8 is a schematic diagram of a relationship between a reflectivity and a wavelength of a dichroscope according to an embodiment of this application;
FIG. 9 is a schematic diagram of still another detection apparatus receiving a signal according to an embodiment of this application;
FIG. 10 is a schematic diagram of yet another detection apparatus receiving a signal according to an embodiment of this application;
FIG. 11 is a schematic diagram of a polarization beam splitting scenario according to an embodiment of this application;
FIG. 12A is a schematic diagram of still another detection apparatus emitting a laser signal according to an embodiment of this application;
FIG. 12B is a schematic diagram of still yet another detection apparatus receiving a signal according to an embodiment of this application;
FIG. 13 is a schematic diagram of a running scenario of an optical system according to an embodiment of this application;
FIG. 14A is a schematic diagram of a further detection apparatus receiving a signal according to an embodiment of this application;
FIG. 14B is a schematic diagram of a still further detection apparatus receiving a signal according to an embodiment of this application;
FIG. 15 is a schematic diagram of a structure of a light emitting unit according to an embodiment of this application;
FIG. 16 is a schematic diagram of a structure of a laser detection unit according to an embodiment of this application;
FIG. 17 is a schematic diagram of a structure of another detection device according to an embodiment of this application;
FIG. 18A is a schematic diagram of yet another detection apparatus emitting a laser signal according to an embodiment of this application;
FIG. 18B is a schematic diagram of a yet further detection apparatus receiving a signal according to an embodiment of this application;
FIG. 19 is a schematic diagram of a structure of another detection apparatus according to an embodiment of this application;
FIG. 20 is a schematic diagram of a structure of still another detection apparatus according to an embodiment of this application;
FIG. 21 is a schematic flowchart of a control method according to an embodiment of this application;
FIG. 22 is a schematic diagram of a structure of a control apparatus according to an embodiment of this application; and
FIG. 23 is a schematic diagram of a structure of another control apparatus according to an embodiment of this application.

### DESCRIPTION OF EMBODIMENTS

The following describes embodiments of this application with reference to accompanying drawings in embodiments of this application. It should be noted that in this application, a word such as "example" or "for example" is used to represent giving an example, an illustration, or a description. Any embodiment or design solution described by using "example" or "for example" in this application shall not be construed as being more preferred or more advantageous than another embodiment or design solution. Exactly, use of the word "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of one item (piece) or a plurality of items (pieces). For example, at least one item (piece) of a, b, or c may represent a, b, c, (a and b), (a and c), (b and c), or (a, b, and c), where a, b, and c may be singular or plural. The term "and/or" describes an association relationship between associated objects and represents that three relationships may exist. For example, A and/or B may represent the following three cases: Only A exists, both A and B exist, and only B exists, where A and B may be singular or plural. The character "/" generally represents an "or" relationship between the associated objects.

In addition, unless otherwise stated, in embodiments of this application, ordinal numbers such as "first" and "second" are used to distinguish between a plurality of objects, and are not intended to limit an order, a time sequence, a priority, or a degree of importance of the plurality of objects. For example, a first beam splitting apparatus and a second beam splitting apparatus are merely intended to distinguish between different beam splitting apparatuses, but do not indicate different structures, detection principles, importance degrees, and the like of the two apparatuses.

For ease of understanding, the following first explains some terms in embodiments of this application.

### 1. Detection apparatus

The detection apparatus mentioned in this application may be a lidar, or may be another optical detection apparatus, for example, a fusion detection apparatus. An operating principle thereof is to detect a corresponding target object by emitting an optical signal and receiving an optical signal from the target object.

The detection apparatus in embodiments of this application can be applied to various fields such as intelligent transportation, autonomous driving, atmospheric environment monitoring, geographic mapping, and uncrewed aerial vehicle, and can complete one or more functions of target detection, distance measurement, speed measurement, target tracking, imaging recognition, and the like.

The detection apparatus in embodiments of this application can be applied to a roadside detection apparatus (for example, an intersection fusion detection apparatus), an in-vehicle detection apparatus (for example, an in-vehicle fusion detection apparatus), or the like, but can also be applied to another detection apparatus, for example, a detection apparatus installed on an apparatus such as an uncrewed aerial vehicle, a robot, a railcar, a bicycle, a signal light, a speed measurement apparatus, or a base station. An installation location of the detection apparatus is not limited in this application.

### 2. Polarization (polarization)

Polarized light means that a vibration direction of an electric vector of light has a specific rule. Polarization is an inherent attribute of light, and a polarization state (polarization state) is a parameter for the light. The polarization state may be classified into linear polarization and elliptic polarization (circular polarization in a special case). When the polarized light is linearly polarized light, the polarization state further includes an angle and an amplitude. When the polarized light is circularly polarized light, the polarization state further includes a polarization direction (clockwise or counterclockwise). For example, an electric vector of the linearly polarized light vibrates back and forth in one direction. However, an electric vector of non-polarized light such as natural light vibrates disorderly and in no same direction, and there is no fixed time correspondence (no fixed phase) when the non-polarized light vibrates. Therefore, the vibration of the non-polarized light is random and has no fixed rule. To describe a relationship between vibration directions, basic linearly polarized light (the linearly polarized light may be combined into elliptically polarized light) is usually distinguished by using P-polarized light and S-polarized light. The P-polarized light represents linearly polarized light whose vibration direction is parallel to a plane of incidence, and the S-polarized light represents linearly polarized light whose vibration direction is perpendicular to the plane of incidence.

The following embodiments of this application provide a detection apparatus, a control method, a fusion detection system, and a terminal, to improve accuracy of a detection result and reduce computational complexity.

An example of the detection apparatus provided in the following embodiments of this application is first described.

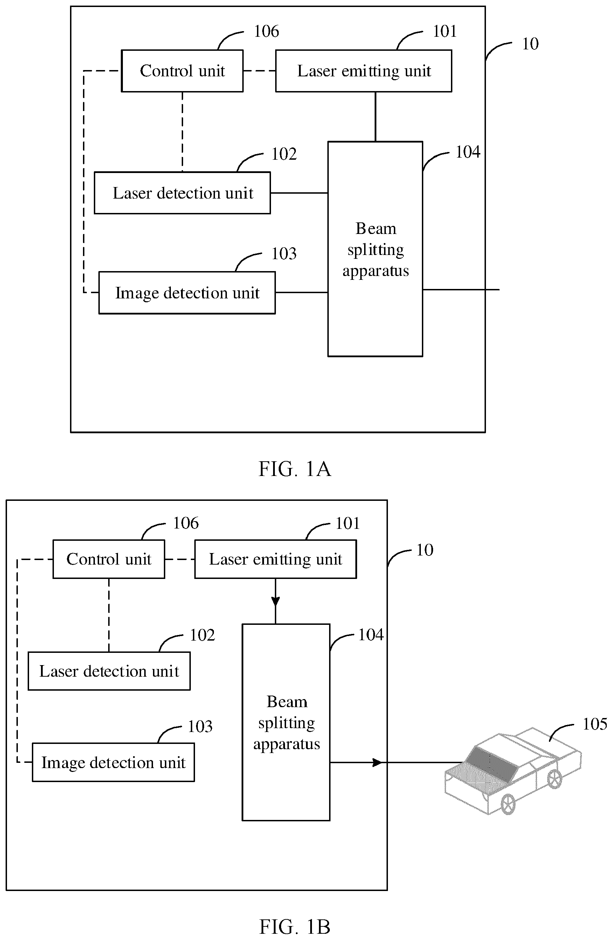

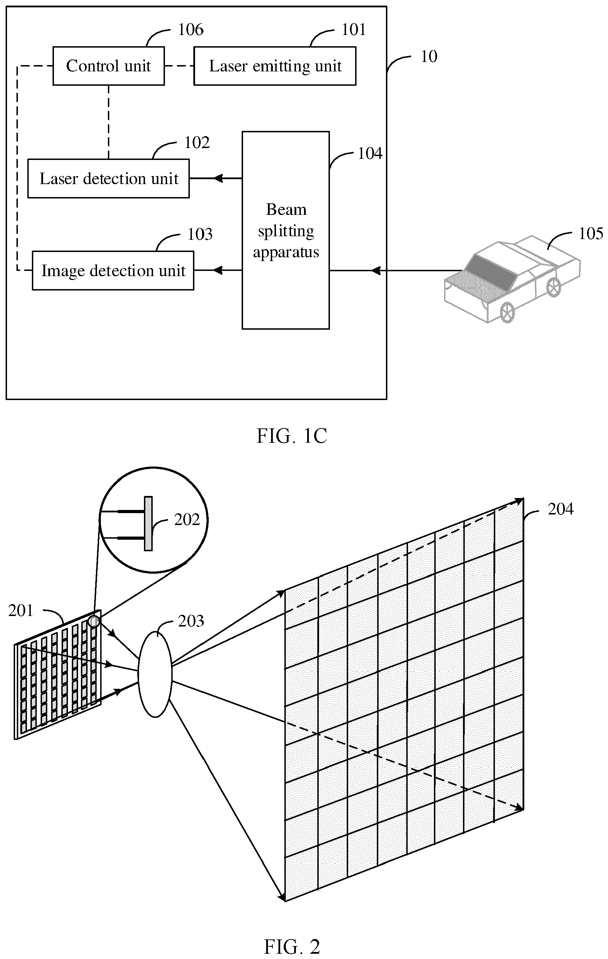

FIG. 1A is a schematic diagram of a possible detection apparatus 10 according to an embodiment of this application. FIG. 1B is a schematic diagram of the detection apparatus 10 emitting a laser signal. FIG. 1C is a schematic diagram of the detection apparatus 10 receiving a signal. As shown in FIG. 1A, the detection apparatus 10 may include a laser emitting unit 101, a laser detection unit 102, an image detection unit 103, and a beam splitting apparatus 104. The detection apparatus may be configured to detect a detection area, and a target object 105 may exist in the detection area. Optionally, the detection apparatus 10 may further include a controller 106. All the units are described in detail as follows.
(1) The laser emitting unit 101 is configured to generate a laser signal. Specifically, the laser emitting unit may include one or more light emitting units. The light emitting unit may be a light emitting device such as a laser diode (laser diode, LD), a vertical cavity surface emitting laser (Vertical Cavity Surface Emitting Laser, VCSEL), a distributed feedback laser diode (distributed feedback LD, DFB-LD), a distributed bragg reflection laser diode (distributed bragg reflection LD, DBR-LD), a grating coupled sampling reflection laser diode (Grating coupled sampling reflection LD, GCSR-LD), or a micro-opto-electro-mechanical system laser diode (micro-opto-electro-mechanical system LD, MOEMS-LD).

Optionally, the laser emitting unit 101 is a flash light source, and the flash light source can irradiate one field of view at a time, and can achieve an effect of surface irradiation.

Optionally, the laser emitting unit 101 may be an array light source including a plurality of light emitting units. The array may be an array with any quantity of rows and any quantity of columns, for example, an array of specifications such as a 1x2 array, a 2x2 array, and a 3x3 array. FIG. 2 is a schematic operating diagram of a possible laser emitting unit. It can be seen that a laser emitting unit 201 is an 8x8 array light source formed by 64 light emitting units. Each light emitting unit may be a light emitting device 202 (during specific implementation, one light emitting unit may also include a plurality of light emitting devices). Further, an optical signal emitted by the laser emitting unit 201 is irradiated to an area 204 through an optical device 203. The area 204 may be referred to as a laser emission field of view of the laser emitting unit 201. The array light source can irradiate to obtain an illumination lattice, and can provide a uniform irradiation field of view, thereby improving detection effect.

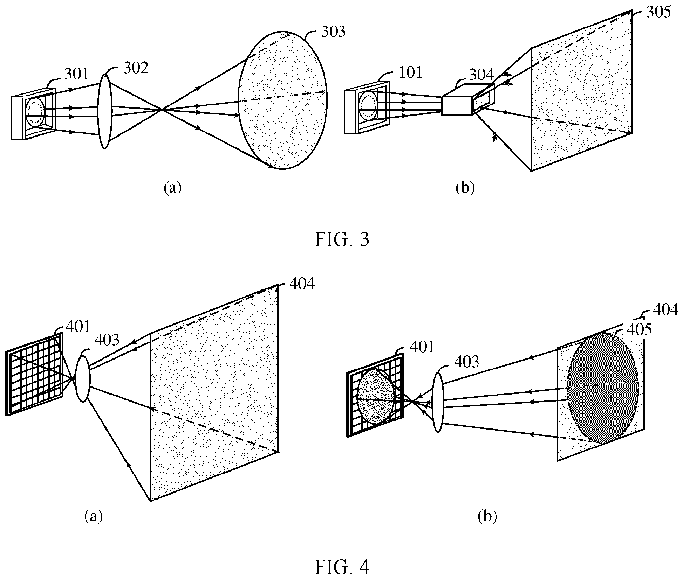

Optionally, the laser emitting unit 101 may alternatively include one light emitting unit. For example, refer to FIG. 3. FIG. 3 is a schematic diagram of another possible laser emitting unit. Refer to (a) in FIG. 3. A laser emitting unit 301 includes a light emitting unit. An optical signal emitted by the light emitting unit is irradiated to an area 303 through an optical device 302. The area 303 may be referred to as a laser emission field of view of the laser emitting unit 301. Optionally, the laser emitting unit 301 may also be referred to as a flood light source, a broadbeamed light source, a floodlight, or the like.

In a possible implementation, the detection apparatus may further adjust, by using a beam shaper or the like, an optical signal emitted by the laser emitting unit 101. For example, refer to (b) in FIG. 3. An optical signal emitted by the laser emitting unit 301 is adjusted by using a beam shaper 304, and is irradiated to an emission field of view shown in an area 305. It should be noted that FIG. 2 and FIG. 3 are provided for ease of description of a scenario in which the laser emitting unit 101 emits an optical signal. Some optical devices (for example, the optical device 203 and the shaper 303) are merely used as examples, and are not intended to limit this solution. During specific implementation, the optical devices may be configured based on a requirement for emitting an optical signal.

(2) The beam splitting apparatus 104 is configured to transmit a first laser signal emitted by the laser emitting unit 101 to the detection area. As shown in FIG. 1B, the first laser signal emitted by the laser emitting unit 101 is irradiated to the target object 105 in the detection area through the beam splitting apparatus. The target object 105 may also be referred to as a first target object. It should be understood that the detection area may further include another detection object. Herein, only the target object 105 is used for description, and a detection area that includes one or more detection objects is still used.

The target object 105 may reflect an optical signal of the laser emitting unit, and may reflect an optical signal of another light source, or may generate an optical signal (for example, the target object includes a vehicle lamp, and the vehicle lamp may generate an optical signal). The detection apparatus 10 may correspondingly receive a signal from the target object 105.

Correspondingly, in the optical signal received by the detection apparatus 10 from the target object 105 in the detection area, a part of the optical signals are reflected signals of the laser signal, and a part of the optical signals are related signals of an ambient light source (for example, may be optical signals directly from the ambient light source, or may be reflected signals obtained by reflecting the optical signals of the ambient light source). The ambient light source may include one or more of a natural light source (for example, the sun) and an artificial light source (for example, a street lamp or a vehicle lamp).

As shown in FIG. 1C, the beam splitting apparatus 104 is further configured to provide a first signal from the detection area for the laser detection unit 102. A part or all of the first signal may come from the first target object in the detection area.

The first signal includes a reflected signal corresponding to the first laser signal, for example, a reflected signal obtained after the first target object reflects the first laser signal emitted by the laser emitting unit 101. The reflected signal (or a part of the emitted signal) may be included in the first signal, and is provided for the laser detection unit 102 through the beam splitting apparatus 104.

The beam splitting apparatus 104 is further configured to provide a second signal from the detection area for the image detection unit 103. A part or all of the second signal may come from the first target object in the detection area.

(3) The laser detection unit 102 is an optoelectronic device configured to receive an optical signal, and can obtain an electrical signal based on the optical signal. Optionally, the laser detection unit 102 may obtain first detection data based on the electrical signal. For example, the first detection data may include the electrical signal or further data obtained after the electrical signal is processed. Further optionally, the first detection data is point cloud information, or point cloud information may be obtained by processing the first detection data.

The point cloud information may be used to obtain information such as a distance, a speed, a reflectivity, and reflection intensity of the detection area. Further optionally, the first detection data may be output to a controller and/or a processor (not shown in the figure), and the controller or the processor may be inside the detection apparatus 10 or outside the detection apparatus.

In a possible design, the laser detection unit 102 may be a detection device array arranged in rows and columns. For example, refer to FIG. 4. FIG. 4 is a schematic diagram of a possible structure of a laser detection unit. A laser detection unit 401 includes at least two detection devices (each grid in the laser detection unit 401 is a detection device). Refer to (a) in FIG. 4. The laser detection unit 401 can receive an optical signal from an area 404 and convert the optical signal into an electrical signal. For example, refer to (b) in FIG. 4. The laser detection unit 401 may receive an optical signal returned by a detection target 405 and convert the optical signal into an electrical signal. Optionally, the optical signal may be converted into the electrical signal by another conversion unit other than the laser detection unit. This is not specifically limited herein. It should be noted that, in a receiving process, the optical signal may optionally pass through various optical devices, for example, a receiving lens 403 illustrated in FIG. 4.

Optionally, based on different detection devices, the laser detection unit 102 may be specifically one of a semiconductor avalanche photodiode (avalanche photodiode, APD) array, a single-photon avalanche diode (single-photon avalanche diode, SPAD) array, or an electron multiplying charge-coupled device (electron multiplying charge-coupled device, EMCCD) array. According to an arrangement rule of a detection unit, the detection unit may be an array of specifications such as a 1x2 array, a 2x3 array, and a 3x3 array. This is not limited in this application.

This application provides two example designs:
Design 1: The laser detection unit 102 may respond to reflected light of the first laser signal, and may further respond to the related signal of the ambient light source.
Design 2: The laser detection unit 102 may respond to reflected light of the first laser signal, but does not respond to the related signal of the ambient light source. Alternatively, the laser detection unit 102 is sensitive to an optical signal in a wavelength range of the first laser signal, and is insensitive to an optical signal in another wavelength range. In this case, it may be considered that the laser detection unit 102 reduces impact of the optical signal in another wavelength range on reflected light of the first laser signal, thereby improving signal validity. For example, the first laser signal is infrared light. The laser detection unit may be sensitive to the infrared light, but is insensitive to non-infrared light (for example, visible light or ultraviolet light). When receiving an optical signal from the detection area, the laser detection unit may respond to the infrared light (including the reflected light of the first laser signal), but does not respond to the non-infrared light (or an electrical signal obtained through response is weak). Therefore, impact of the non-infrared light on the reflected light of the first laser signal is reduced.

(4) The image detection unit 103 is an array including a plurality of photosensitive devices, and obtains second detection data by converting an optical signal into an electrical signal. Specifically, the image detection unit 103 may obtain pixel information (or an electrical signal) based on the optical signal from the detection area, and the second detection data may include the pixel information or further data obtained after the pixel information is processed. Optionally, the second detection data includes image information, or image information may be obtained by processing the second detection data. The image information may be used to obtain a color, a pattern, a point of interest, or the like of the detection area, or may be used to analyze and identify the detection area. Further optionally, the second detection data may be output to the controller (for example, the controller 106) and/or the processor (not shown in the figure), and the controller or the processor may be inside the detection apparatus 10 or outside the detection apparatus.

The photosensitive device may include at least one of a charge-coupled device (Charge-coupled Device, CCD), a complementary metal oxide semiconductor (Complementary Metal Oxide Semiconductor, CMOS), a live MOS, and the like. It should be noted that, in addition to a device having a photosensitive effect, the image detection unit 103 may further include another optical device to achieve higher image detection effect. For example, the image detection unit 103 may further include at least one of the following: a micro lens (micro lens), a color filter (for example, a red, green, and blue color filter), or a low-pass filter.

In an example design of this application, the image detection unit 103 may respond to the reflected light of the first laser signal, and may further respond to the related signal of the ambient light source. In this case, it may be considered that the image detection unit 103 supports operating in a laser illumination mode, and the image detection unit 103 may be applied to a scenario without the ambient light source (certainly, may alternatively be applied to a scenario with the ambient light source).

Optionally, the image detection unit 103 may be specifically at least one of a color camera, a grayscale camera, an infrared camera, a multispectral camera, or a multidimensional camera. It should be noted that the camera herein does not necessarily have a camera structure in a broad sense. To describe a feature that can be used for imaging, the camera is described as a camera, and may also be referred to as an image sensor during specific implementation.

The color camera usually uses a filter array or another vision-related technology to record a color of the detection area by using information such as a wavelength and a refractive index of an optical signal. The grayscale camera can count a quantity of electrons obtained by converting photons in an optical signal, to obtain a grayscale image that reflects strength of the optical signal. The infrared camera can obtain an infrared image of the detection area through an infrared photosensitive device. In some implementations, the infrared camera can further obtain other properties of some objects in the detection area, for example, one of moisture content, temperature, chemical composition, and the like. For another example, some infrared cameras support observation of an inner structure through a cloth, a plastic sheet, or the like. Further optionally, the infrared camera may be specifically one of a short-wave infrared camera, a medium- and long-wave infrared camera, or the like.

The multispectral camera can obtain images of a plurality of bands. A conventional color camera usually classifies visible light into three reference colors: red-green-blue (Red-Green-Blue, RGB), and light with different spectral content may present same RGB color coordinates. Consequently, original spectral content of an optical signal is lost. A multispectral imaging technology can provide images of a plurality of wavelengths, so that accurate spectral information can be obtained.

The multidimensional camera is a camera that obtains more information about the detection area in combination with another dimension in one or more original dimensions such as a wavelength and strength of light. It may be understood that the grayscale camera can generate a grayscale pixel by using a quantity of photons, and the color camera can determine a corresponding color by using a wavelength of light. The multidimensional camera can obtain another attribute of the light, for example, one or more attributes of a polarization direction of the light, an amplitude of the light, energy density, and the like.

For example, the multidimensional camera may include a polarization camera, for example, may be at least one of a grayscale polarization camera, a color polarization camera, or a multispectral polarization camera.

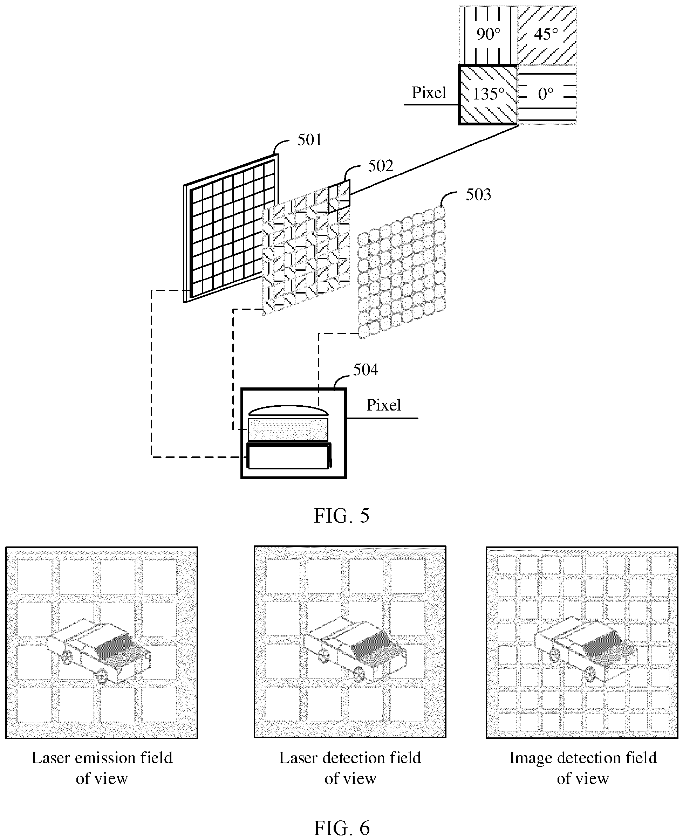

Specifically, a polarization array is disposed above a photosensitive device of the polarization camera, and a polarizer in the polarization array may be configured to transmit light in a preset polarization direction, to obtain polarization information of reflected light. The preset polarization direction is related to a property of the polarizer. A polarization direction that can pass through the polarizer may be preset during manufacturing of the polarizer, or an effect of transmitting light in a polarization direction may be achieved through circuit control. For example, refer to FIG. 5. FIG. 5 is a schematic diagram of a possible image detection unit according to an embodiment of this application. The image detection unit may include three layers of arrays, which are specifically a pixel array (pixel array) 501, a polarizer array (polarizer array) 502, and a micro lens array (micro lens array). As shown in an area 501, a pixel unit includes a photosensitive device, a polarizer, and a micro lens. It can be learned that four polarizers with different properties (for example, angles of polarization directions that can pass through are respectively 90°, 45°, 135°, and 0°) are separately placed on a single pixel. During calculation, every four pixels may be used as a group, and a degree and a direction of polarization can be calculated by using association between polarizers in different directions.

It may be understood that the color polarization camera is a color camera configured with a polarizer. The grayscale polarization camera is a grayscale camera configured with a polarizer. The multispectral polarization camera is a multispectral camera configured with a polarizer.

(5) Optionally, the detection apparatus 10 may further include the controller 106. The controller 106 is configured to control some or all components in the detection apparatus 10. Optionally, the controller 106 may include one or more of the following apparatuses: a processor, a field programmable gate array, an application processor (application processor, AP), a graphics processing unit (graphics processing unit, GPU), an image signal processor (image signal processor, ISP), a digital signal processor (digital signal processor, DSP), a neural-network processing unit (neural-network processing unit, NPU), or the like.

It should be understood that the controller 106 may include a plurality of sub-control units. For example, the controller 106 may include two sub-control units. One sub-control unit is configured to control the laser emitting unit and the laser detection unit, and the other sub-control unit is configured to control the image detection unit.

In a design, the controller 106 may generate a control signal and send the control signal to at least one unit in the apparatus 10, to control the at least one unit. For example, the controller 106 may send a first control signal to the laser emitting unit 101, and the laser emitting unit 101 generates a laser signal in response to the first control signal. For another example, the controller 106 may further send a second control signal to the laser detection unit 102, to control the laser detection unit 102 to convert an optical signal into an electrical signal. Similarly, the controller 106 may further send a third control signal to the image detection unit 103, to control the image detection unit 103 to convert an optical signal into an electrical signal.

Alternatively, the controller 106 may be further connected to an external processor (or an external controller). For example, the detection apparatus 10 is a vehicle-mounted radar. The controller 106 in the detection apparatus 10 may be connected to a multi domain controller (Multi Domain Controller, MDC) in a vehicle. The MDC may send an instruction to the controller 106, and the controller 106 generates a control signal according to the instruction.

Further, the controller may send information and/or data to the MDC, so that the MDC performs fusion and/or decision processing.

In another possible design, the detection apparatus 10 may further include a processing apparatus (not shown in the figure). The processing apparatus may obtain the point cloud information of the detection area based on the first detection data from the laser detection unit 102, and/or obtain the image information of the detection area based on the second detection data from the image detection unit 103. Further, the processing apparatus may further obtain a detection result of the detection area based on the point cloud information and the image information.

It should be noted that, when the detection apparatus 10 includes the controller 106 and the processing apparatus, the processing apparatus and the controller 106 may be integrated or independent.

It can be learned that, in the detection apparatus shown in FIG. 1A, FIG. 1B, or FIG. 1C, the laser emitting unit, the laser detection unit, and the image detection unit are integrated into one detection apparatus, to reduce an overall size, reduce impact caused by motion, vibration, and the like on fusion detection, and improve compactness and stability of a device. Further, in this embodiment of this application, optical paths of the laser signal, the first signal, and the second signal can be coaxial through the beam splitting apparatus 104. The image detection unit can correspondingly receive a laser signal reflected by the detection area irradiated by the laser emitting unit, thereby improving accuracy of the detection result. In addition, the image detection unit and the laser detection unit synchronously obtain the point cloud information and the image information of the detection area, to facilitate subsequent fusion of the point cloud information and the image information that are of a lidar without performing complex calibration and registration, thereby reducing computational complexity, and improving resolution of the detection result.

In a possible design, in the detection apparatus shown in FIG. 1A, FIG. 1B, or FIG. 1C, a center point of a laser emission field of view, a center point of a laser detection field of view, and a center point of an image detection field of view overlap with each other. The laser emission field of view is an area that can be irradiated by the laser signal emitted by the laser emitting unit, the laser detection field of view is an area that can be detected by the laser detection unit, and the image detection field of view is an area that can be detected by the image detection unit. It may be understood that a point corresponding to a principal optical axis is a center point of a field of view. Because the optical paths of the laser signal, the first signal, and the second signal are coaxial, the center point of the laser emission field of view, the center point of the laser detection field of view, and the center point of the image detection field of view in the detection apparatus overlap with each other. It should be noted that the overlapping herein means that the center points of the fields of view are also coaxial because the optical paths are coaxial. However, during specific implementation, the center points are not necessarily precisely overlapping. For example, the overlapping may be not necessarily accurate due to different process designs. However, the method in this application can reduce complexity of registration and calibration as much as possible.

When the center points overlap, the laser detection unit may correspondingly receive an optical signal returned by the area irradiated by the laser emitting unit, thereby improving accuracy of a laser detection result. FIG. 6 is a schematic diagram of a possible field of view according to this embodiment of this application. It can be learned that the area that can be detected by the laser detection unit can be irradiated by the emitted laser signal, and an echo signal reflected from the area irradiated by the laser can be detected, so that the laser detection unit can receive as many reflected signals as possible, thereby improving efficiency and accuracy of laser detection.

If the laser detection field of view overlaps with the image detection field of view, complexity of registration and calibration during subsequent fusion can be reduced, computation consumption can be reduced, and efficiency of obtaining the detection result can be improved.

It may be understood that a structure shown in this embodiment of this application does not constitute a specific limitation on the detection apparatus 10. In some other embodiments of this application, the detection apparatus 10 may combine some units, or split some units, or have different unit arrangements, or further include another unit. The units shown in FIG. 1A, FIG. 1B, or FIG. 1C may be implemented by hardware, software, or a combination of software and hardware.

The following describes some possible designs in this application. Each design is used to describe a possible case. A plurality of designs that are not mutually exclusive may be combined. Some combined cases are not described again in embodiments.

In a possible design, the beam splitting apparatus 104 in the detection apparatus 10 shown in FIG. 1A, FIG. 1B, or FIG. 1C may specifically include a first beam splitting apparatus and a second beam splitting apparatus. When transmitting a laser signal, the first beam splitting apparatus transmits the laser signal to the second beam splitting apparatus, and the second beam splitting apparatus transmits the laser signal to the detection area.

When receiving a signal, the second beam splitting apparatus splits the optical signal from the detection area into the first signal and the second signal, provides the first signal for the first beam splitting apparatus, and provides the second signal for the image detection unit. The first beam splitting apparatus further provides the first signal for the laser detection unit.

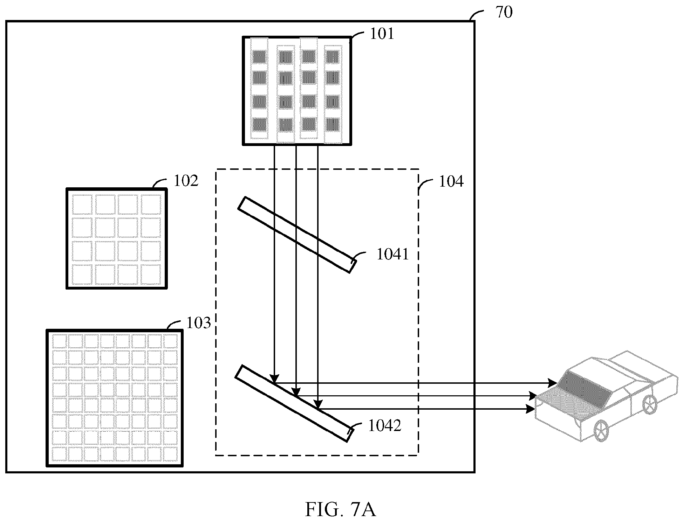

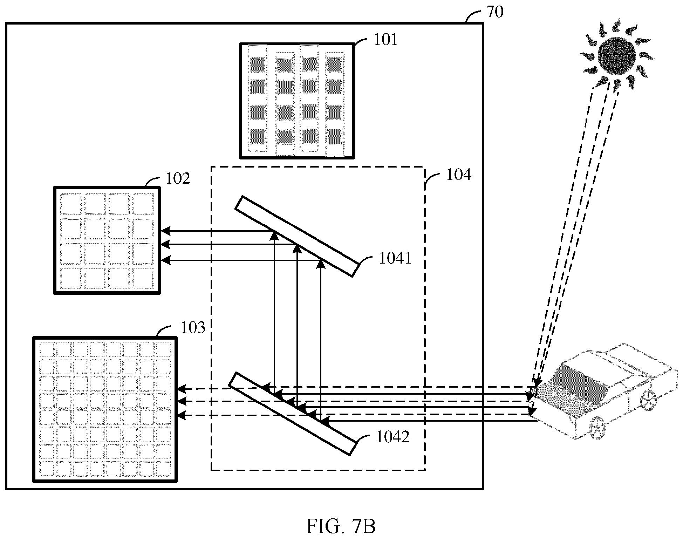

For example, refer to FIG. 7A and FIG. 7B. FIG. 7A is a schematic diagram of a possible detection apparatus 70 emitting a laser signal according to an embodiment of this application. FIG. 7B is a schematic diagram of the possible detection apparatus 70 receiving a signal. In the detection apparatus 70, the beam splitting apparatus 104 includes a first beam splitting apparatus 1041 and a second beam splitting apparatus 1042. Optionally, the detection apparatus 70 may further include a controller (not shown in the figure) and another optical device (for example, a lens, a filter, or a light uniformizer).

Refer to FIG. 7A. When transmitting a laser signal, the first beam splitting apparatus 1041 transmits a first laser signal from the laser emitting unit 101 to the second beam splitting apparatus 1042, and the second beam splitting apparatus transmits the first laser signal to a detection area. For example, the detection area includes a detection target 105. The first laser signal generates diffuse reflection on the detection target 105, and a part of reflected signals are transmitted to the detection apparatus 70. Certainly, a related optical signal of another light source in an environment (for example, reflected light generated when the sun irradiates the detection target 105) is also transmitted to the detection apparatus 70.

Refer to FIG. 7B. The second beam splitting apparatus 1042 may split an optical signal from the detection area into a first signal and a second signal, provide the first signal for the first beam splitting apparatus 1041, and provide the second signal for the image detection unit 103. The first beam splitting apparatus 1041 further provides the first signal for the laser detection unit 102. The first signal includes a reflected signal of the first laser signal emitted by the detection apparatus 70.

It should be noted that positions of the laser emitting unit 101 and the laser detection unit 102 of the detection apparatus 70 may be exchanged, and positions of other components may also be exchanged.

In the embodiment shown in FIG. 7A and/or FIG. 7B, optical paths of the first laser signal, the first signal, and the second signal are coaxial through the first beam splitting apparatus and the second beam splitting apparatus. The image detection unit can correspondingly receive a laser signal reflected by the detection area irradiated by the laser emitting unit. In addition, the image detection unit and the laser detection unit synchronously obtain point cloud information and image information of the detection area, to facilitate subsequent fusion of the point cloud information and the image information that are of a lidar.

In another possible design, the first signal includes a signal whose wavelength range falls inside a first wavelength range, and the second signal includes a signal whose wavelength range falls inside a second wavelength range. A wavelength range is a band between a maximum value (upper limit) and a minimum value (lower limit) of a wavelength (optionally including the maximum value and/or the minimum value).

A width of the first wavelength range may be different from a width of the second wavelength range. For example, the first wavelength range includes wavelengths of 780 nm and above, and the second wavelength range includes wavelengths below 780 nm.

Specifically, the first wavelength range and the second wavelength range may overlap or do not overlap. For example, the first wavelength range includes wavelengths of 700 nm and above, and the second wavelength range includes wavelengths of 800 nm and below. In this case, the first wavelength range has an overlapping part between 700 nm and 800 nm.

Refer to Table 1. Table 1 shows possible light colors and wavelength ranges corresponding to the light colors provided in this embodiment of this application.

**Table 1 Possible light colors and wavelength ranges corresponding to the light colors**

| Light color | Wavelength |
|---|---|
| Far infrared | 5 µm (µm) to 1,000 µm |
| Mid-infrared | 3 µm to 5 µm |
| Near infrared | 780 nm (nm) to 3 µm |
| Red | 620 nm to 780 nm |
| Orange | 590 nm to 620 nm |
| Yellow | 570 nm to 590 nm |
| Green | 495 nm to 570 nm |
| Cyan | 476 nm to 495 nm |
| Blue | 450 nm to 475 nm |
| Purple | 380 nm to 450 nm |

It should be noted that the wavelength range shown in Table 1 is merely an example of a possible wavelength range. For an upper limit and a lower limit of each wavelength range, refer to one or more of the following standard documents or solutions recommended by organizations: a standard document of ophthalmic optics and ophthalmic devices, a standard document of ISO 20473:2007 optics and photonics-spectral bands (Optics and photonics-Spectral bands), an International Commission on Illumination classification system, or an astronomy classification solution.

A possible case is used as an example in this application: The laser emitting unit may emit infrared light (for example, mid-infrared ray at a wavelength of 3 µm to 5 µm), the laser detection unit may respond to the infrared light, and the image detection unit may respond to visible light. The second beam splitting apparatus is configured to split the optical signal from the detection area into the first signal and the second signal. The first signal includes an optical signal whose wavelength range falls inside a wavelength range of the infrared light, and the second signal includes an optical signal whose wavelength range falls inside a wavelength range of the visible light. The laser detection unit may receive the infrared light (including reflected light obtained based on the emitted infrared light), and obtain the point cloud information based on the received infrared light. In addition, the image detection unit receives the visible light, and performs imaging to obtain the image information.

In still another possible design, the second beam splitting apparatus may be one or a combination of a dichroscope (dichroscope), a semi-transmissive semi-reflective beam splitter (or referred to as a semi-transmissive semi-reflective mirror), or a medium beam splitter (one of a dielectric beam splitter, a metal film beam splitter, and the like). This application provides two possible implementations.

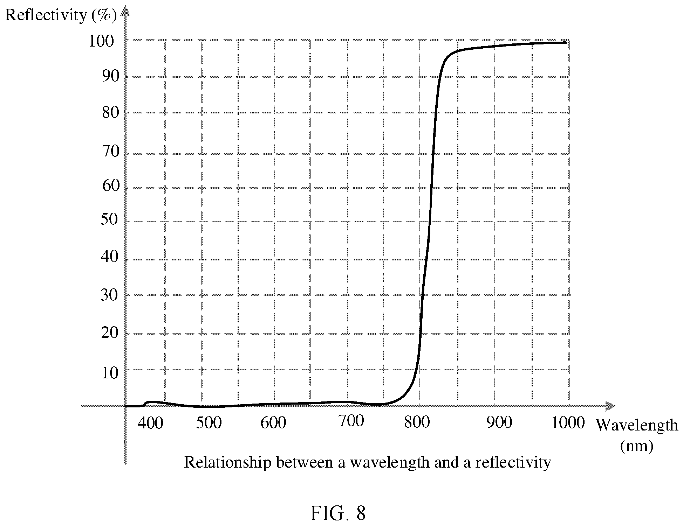

Implementation 1: The second beam splitting apparatus includes a dichroscope. The dichroscope is an optical device having different reflectivity and transmittance properties for light at different wavelengths, and may also be referred to as a dichroic beam splitter (dichroic beam splitter), a dichroic filter (dichroic filter), a dichroic splitter, or the like. For example, refer to FIG. 8. FIG. 8 is a schematic diagram of a possible reflectivity of a dichroscope according to an embodiment of this application. It can be learned that the dichroscope shown in FIG. 8 has a low reflectivity in a wavelength range with wavelengths less than 750 nm. In other words, most optical signals whose wavelengths are less than 750 nm are transmitted by the dichroscope. The dichroscope has a high reflectivity in a wavelength range with wavelengths greater than 800 nm. In other words, most optical signals whose wavelengths are greater than 800 nm are reflected when passing through the dichroscope.

It can be learned that the dichroscope having the reflection performance shown in FIG. 8 can reflect the infrared light and transmit the visible light, thereby achieving an effect of splitting optical signals in different wavelength ranges. It can be learned that light splitting is a description of effect. The dichroscope reflects or transmits light based on a wavelength range of a passed optical signal, thereby achieving an effect of light splitting.

It may be understood that a reflectivity and a refractive index of the dichroscope shown in FIG. 8 are merely examples for description, and do not limit the dichroscope in this application to totally meet the performance. A specific reflectivity depends on specific implementation of the dichroscope. In addition, in some embodiments, the dichroscope may further reflect a short wave and transmit a long wave. Details are not described herein.

A possible implementation is as follows: The laser emitting unit may emit the infrared light (for example, the mid-infrared ray at the wavelength of 3 µm to 5 µm), the laser detection unit may respond to the infrared light, and the image detection unit is an image sensor for imaging with the visible light. The second beam splitting apparatus (for example, the dichroscope shown in FIG. 8) is configured to provide the first signal from the detection area for the laser detection unit, and provide the second signal from the detection area for the image detection unit. The first signal includes an optical signal whose wavelength range is greater than 800 nm, and the second signal includes an optical signal whose wavelength range is less than 800 nm. In other words, the first signal includes a reflected signal corresponding to the transmitted laser signal, and the second signal includes the visible light. The first signal is provided for the laser detection unit, and the second signal is provided for the image detection unit, so that each detection unit obtains a valid optical signal, thereby improving signal utilization.

For example, refer to FIG. 7B. A solid-line arrow represents the infrared light, and a dashed-line arrow represents the visible light. The second beam splitting apparatus (the dichroscope) may split the optical signal from the detection area into two parts. The first signal includes the infrared light, and the second signal includes the visible light. The first signal is provided for the laser detection unit 102, and the second signal is provided for the image detection unit 103, so that each detection unit obtains a valid optical signal, thereby improving signal utilization.

Implementation 2: The second beam splitting apparatus may be a semi-transmissive semi-reflective beam splitter. The semi-transmissive semi-reflective beam splitter can split, in a specific wavelength range, one beam of light into two beams of light whose spectral components are approximately the same, that is, in a specific wavelength area, for example, in a wavelength range from 300 nm to 100 µm, transmittance and reflectivity for wavelengths are the same (being the same herein are not necessarily totally the same, and there may be fluctuations within a specific range but the fluctuations are small). Generally, a neutral beam splitter in which transmitted light and reflected light respectively account for 50% is common. However, this application is also applicable to a beam splitter in another transmission proportion (reflection proportion).

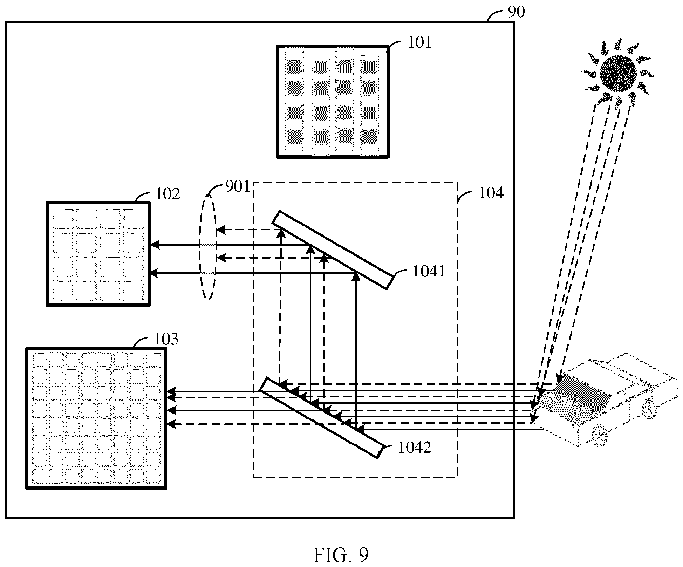

FIG. 9 is a schematic diagram of still another detection apparatus 90 receiving optical system according to an embodiment of this application. The second beam splitting apparatus 1042 is a semi-transmissive semi-reflective beam splitter. The second beam splitting apparatus 1042 splits an optical signal from a detection area into a first signal and a second signal. The first signal is reflected by the second beam splitting apparatus 1042 to the first beam splitting apparatus 1041, and the second signal is transmitted by the second beam splitting apparatus 1042 to the image detection unit 1041. Spectral components of the first signal and the second signal shown in FIG. 9 are approximately the same. If the detection area can reflect a laser signal, the first signal includes a reflected signal of a laser signal emitted by the laser emitting unit 101.

In another example, a filter may be disposed between the laser detection unit 102 and the first beam splitting apparatus 1041, and the filter may filter other stray light.

For example, the detection apparatus 90 shown in FIG. 9 optionally includes a filter 901. The filter 901 may filter an optical signal whose wavelength range is different from that of an emitted laser signal.

A possible case is as follows: The laser signal emitted by the laser emitting unit 101 is infrared light, and the first beam splitting apparatus splits the optical signal from the detection area into the first signal and the second signal whose spectral components are approximately the same. The first signal includes both infrared light (the infrared light includes reflected light obtained based on the emitted infrared light) and an optical signal at another wavelength. However, light in another wavelength range in the first signal can be filtered through an optical device 901, and the infrared light is provided for the laser detection unit 102, so that validity of a signal received by the laser detection unit 102 is improved.

In this case, if the image detection unit includes an infrared camera, an infrared image of the detection area may be obtained.

It should be noted that the optical device 901 may be further disposed at any position between the laser detection unit 102 and the second beam splitting apparatus 1042. FIG. 9 is only an example in which the optical device 901 is disposed between the laser detection unit 102 and the first beam splitting apparatus 1041.

In yet another possible design, the first beam splitting apparatus may be one or a combination of a polarization beam splitter (polarization beam splitter, PBS) or a semi-transmissive semi-reflective beam splitter (or referred to as a semi-transmissive semi-reflective mirror). For ease of understanding, this application provides two possible implementations.

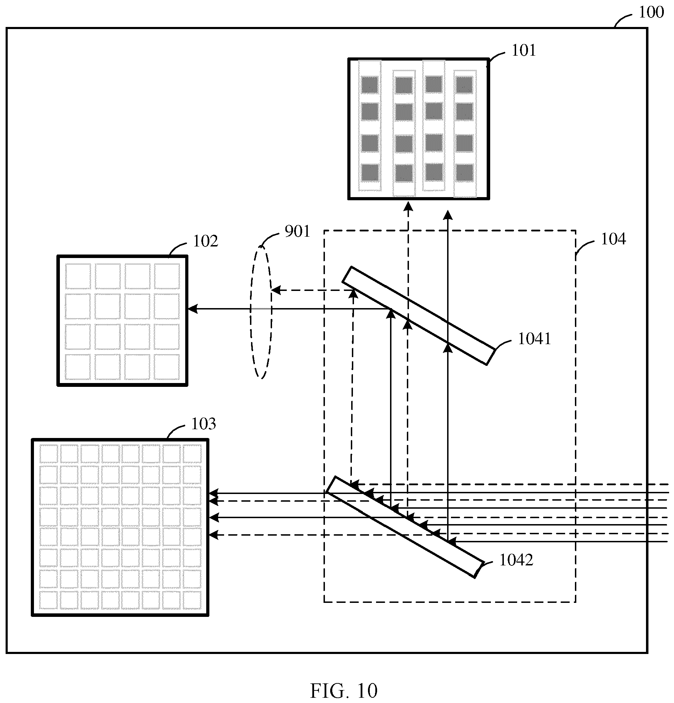

Implementation 1: The first beam splitting apparatus is a semi-transmissive semi-reflective beam splitter. For example, refer to FIG. 10. FIG. 10 is a schematic diagram of a possible detection apparatus 100 according to an embodiment of this application. In the detection apparatus 100, the first beam splitting apparatus 1041 may be a semi-transmissive semi-reflective beam splitter. When passing through the first beam splitting apparatus 1041, a first signal is split into two parts whose spectral components are approximately the same. One part of the signal is reflected in a direction of the laser detection unit 102, and the other part of the signal is transmitted in a direction of the laser emitting unit 101. The detection apparatus 100 may further include a controller (not shown in FIG. 10). For a specific description of each unit, refer to the foregoing description. Details are not described herein again.

Further, because a part of reflected light is transmitted to the laser emitting unit, the part of reflected light may interfere with laser detection. The detection apparatus may perform detection in a form of a pulse or by using a detection frame, and reduce impact of an interference signal in a time division manner. The detection apparatus may further configure a filter or an apparatus for absorbing the reflected light in a direction of the laser emitting unit, to reduce the impact of the interference signal.

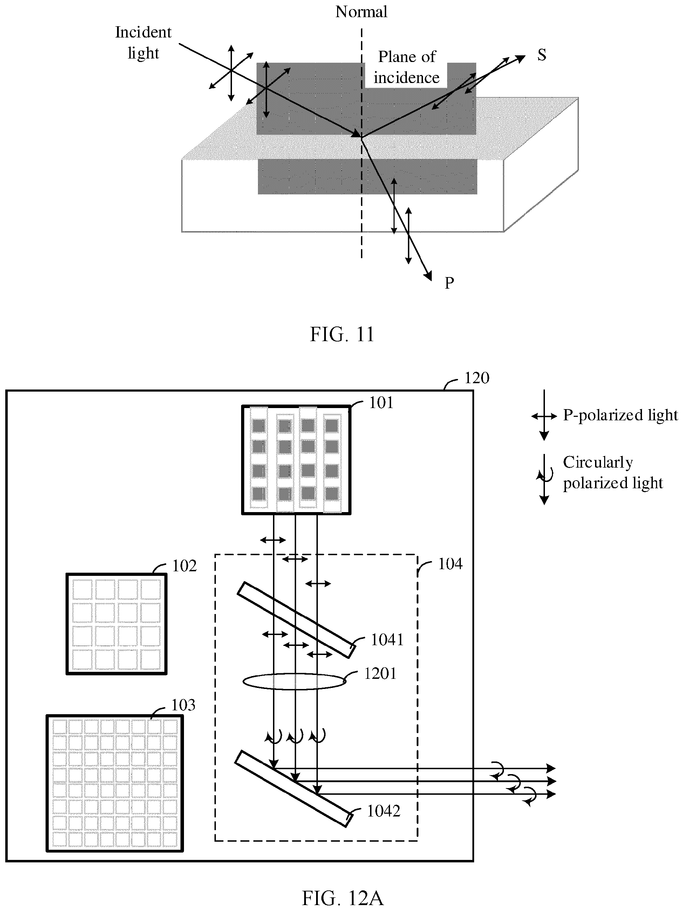

Implementation 2: The first beam splitting apparatus is a polarization beam splitter. The polarization beam splitter can split polarized incident light into two beams of polarized light for transmission. FIG. 11 is a schematic diagram of possible beam splitting of a PBS. A single-arrow solid line is used to represent light, and a double-arrow solid line is used to represent a polarization state of an optical signal. A plane formed by incident light and a normal is referred to as a plane of incidence (plane of incidence). A polarization direction of the incident light may be formed by two quadrature components. One quadrature component is perpendicular to the plane of incidence, and the other quadrature component is parallel to the plane of incidence. In two beams of light emitted from the PBS, a polarization direction of transmitted light is parallel to the plane of incidence, which is referred to as P-polarized light (derived from parallel in German, meaning parallel). A polarization direction of reflected light is perpendicular to the plane of incidence, which is referred to as S-polarized light (derived from senkrecht in German, meaning perpendicular). It can be learned that polarization directions of the P-polarized light and the S-polarized light are perpendicular to each other.

The polarization beam splitter may perform light splitting based on a polarization state. Therefore, the polarization beam splitter can be used with a device that can change the polarization state to allow a laser emitting unit and a laser detection unit to be coaxial. For example, a laser signal emitted by the laser emitting unit is in a first polarization direction, and may be provided for a detection area after passing through the polarization beam splitter. A polarization direction of an optical signal from the detection area may be changed by using another optical device. After passing through the polarization beam splitter, the optical signal whose polarization direction is changed is provided for the laser detection unit, and is not transmitted to (or a small part of the optical signal is transmitted to) the laser emitting unit (or most of the optical signal is provided for the laser detection unit, and a small part of light is absorbed or transmitted to another direction). Therefore, the laser emitting unit and the laser detection unit can be coaxial, and a loss of an echo signal can be reduced.

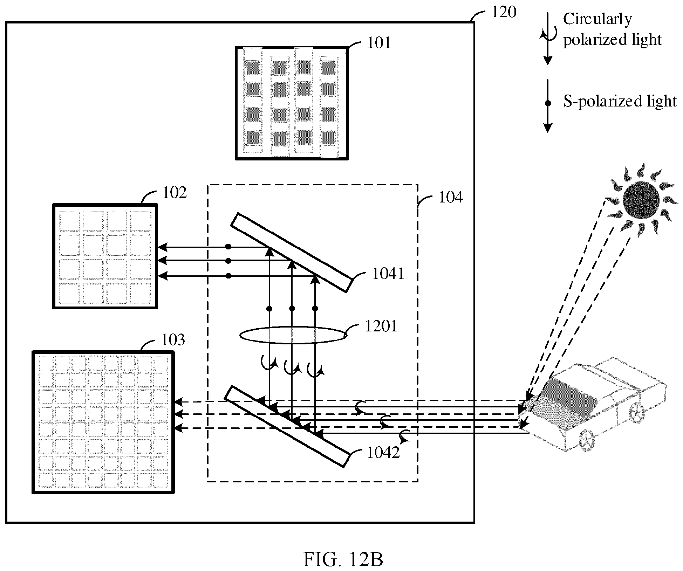

Further optionally, the device that changes the polarization state may be a wave plate. FIG. 12A is a schematic diagram of a possible detection apparatus 120 emitting a laser signal according to an embodiment of this application. FIG. 12B is a schematic diagram of the possible detection apparatus 120 receiving a signal. The detection apparatus 120 includes the laser emitting unit 101, the laser detection unit 102, the image detection unit 103, the beam splitting apparatus 104, and a wave plate (wave plate) 1201. The beam splitting apparatus 104 includes the first beam splitting apparatus 1041 and the second beam splitting apparatus 1042, and the first beam splitting apparatus 1041 is a polarization beam splitter. Optionally, the detection apparatus 120 may further include a controller (not shown in the figure) and another optical device (for example, a lens, a filter, or a light uniformizer). For description of each unit, refer to the foregoing description. It should be understood that the detection apparatus 120 shown in FIG. 12A (or FIG. 12B) describes the wave plate as an apparatus 1201. However, in some implementations, the wave plate 1201 may also be included in the first beam splitting apparatus 1041, that is, the first beam splitting apparatus 1041 includes the wave plate 1201 and the polarization beam splitter.

Refer to FIG. 12A. When a signal is transmitted, a polarization state of a laser signal emitted by the laser emitting unit 101 is a first polarization state. For example, a first laser signal emitted by the laser emitting unit 101 is P-polarized light (relative to the first beam splitting apparatus). The first beam splitting apparatus 1041 may transmit the laser signal from the laser emitting unit to the wave plate 1201. The wave plate 1201 is configured to change a polarization state of P-polarized light from the first beam splitting apparatus to circular (or elliptic) polarization, to obtain circularly polarized light. The circularly polarized light is transmitted to the second beam splitting apparatus, and the second beam splitting apparatus irradiates the circularly polarized light to a detection area.

Refer to FIG. 12B. When receiving a signal, the second beam splitting apparatus splits a related optical signal of another ambient light source and reflected light (which is circularly polarized light) that is obtained from the detection area based on the emitted laser signal into a first signal and a second signal. The second signal is provided for the image detection unit 103, and the first signal is provided for the wave plate 1201. The wave plate 1201 changes a polarization state of circularly polarized light in the first signal to S polarization, to obtain a first signal including S-polarized light. The first signal including the S-polarized light is provided for the first beam splitting apparatus. Because the S-polarized light is perpendicular to a plane of incidence, the polarization beam splitter 1041 transmits the S-polarized light to the laser detection unit. In this way, the laser detection unit can correspondingly receive the reflected signal obtained based on the emitted laser signal, thereby improving signal validity.

The wave plate is also referred to as a retarder (retarder), and can transmit light and change a polarization state of the light. The polarization state of the light is specifically changed by delaying (or delaying) one polarization component of a quadrature component. The wave plate may be specifically a quarter-wave plate, an eighth-wave plate, or the like, or may be formed by two eighth-wave plates. The quarter-wave plate delays a phase of one polarization component of the quadrature component by a quarter of a wavelength, and the eighth-wave plate delays a phase of one polarization component of the quadrature component by one-eighth of a wavelength.

The wave plate is usually made of a crystal material, but may also be made of another material. For example, a crystalline quartz polarization rotator (Crystalline Quartz Polarization Rotator) is a monocrystal of quartz.

For another example, a Fresnel rhomb retarder (Fresnel Rhomb Retarder) uses internal reflection at a specific angle in a prism structure to delay incident polarized light. Each time the light is reflected, P-polarized light moves forward by λ/8, where λ is a polarized wavelength. When light is emitted from a Fresnel rhomb retarder having two surfaces for reflection, a total delay is λ/4.

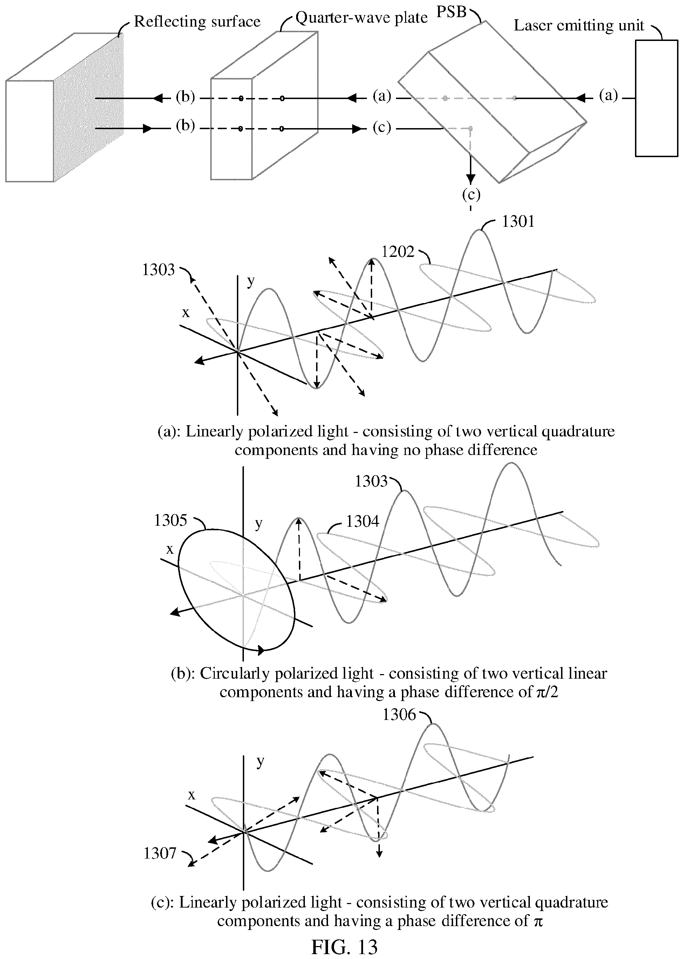

FIG. 13 is a schematic diagram of optical properties of a possible quarter-wave plate according to an embodiment of this application. A laser emitting unit may emit an (a) signal, and a polarization direction of the (a) signal is parallel to a plane of incidence on a PSB. Therefore, the (a) signal is transmitted to the quarter-wave plate by the PSB. A polarization direction 1303 of the (a) signal may be decomposed into two quadrature components. A waveform of one component is shown in 1301 (on a y-axis plane), and a waveform of the other component is shown in 1302 (on an x-axis plane). The quarter-wave plate may delay a component of the quadrature component by a quarter, for example, delay a polarization component on the y-axis plane by a quarter, to obtain a (b) signal. Polarization of the (b) signal is circular polarization 1305. The circular polarization 1305 may be decomposed into two quadrature components. A waveform of one component is shown in 1303 (on a y-axis plane), and a waveform of the other component is shown in 1304 (on an x-axis plane). The (b) signal is irradiated to a reflecting surface (reflecting surface). When a reflected (b) signal passes through the quarter-wave plate, a polarization component on the y-axis plane is delayed by a quarter again to obtain a (c) signal. A polarization direction 1307 of the (c) signal may be decomposed into two quadrature components. It can be learned that compared with the waveform 1303, a waveform 1106 of a polarization component on a y-axis of the (c) signal is delayed by a quarter. The (c) signal is perpendicular to the plane of incidence on the PSB, so that the (c) signal is reflected by the PSB, and the (c) signal is transmitted in a direction different from that of the (a) signal.

It should be noted that optical paths shown in FIG. 12A (or FIG. 12B) and FIG. 13 are merely examples. During specific implementation, laser light emitted by the laser emitting unit may further include light in another polarization direction. In this case, the PSB may filter light.

It may be understood that, because an optical path is reversible, positions of the laser emitting unit and the laser detection unit may be exchanged. For example, in the detection apparatus 120 shown in FIG. 12B, positions of the laser emitting unit 101 and the laser detection unit 102 may be exchanged. In this case, the laser signal emitted by the laser emitting unit 101 may be S-polarized light, and correspondingly, the laser receiving unit 102 may receive P-polarized light from the first beam splitting apparatus 1041.

In still yet another possible design, the laser detection unit 101 may emit polarized light by configuring a polarizer or by configuring a polarization film coating. This application provides two possible implementations.

Implementation 1: A polarizer is disposed between a laser emitting unit and a first beam splitting apparatus (PSB), and the polarizer may make a laser signal passing through the polarizer be a laser signal in a first polarization direction.

In an example, after a first laser signal emitted by a detection apparatus passes through the polarizer, a polarization direction of the first laser signal is the first polarization direction. Correspondingly, when receiving a signal, the laser detection apparatus may filter out a signal whose polarization direction is different from a second polarization direction. The second polarization direction is a polarization direction of a reflected signal of the first laser signal. Therefore, validity of a signal received by the laser detection unit can be improved, and a laser detection effect can be improved. The second polarization direction may be the same as or different from the first polarization direction. It should be understood that, when the second polarization direction is different from the first polarization direction, another optical device (for example, a wave plate) may be disposed in the apparatus, so that a polarization direction of an optical signal passing through the optical device is changed.

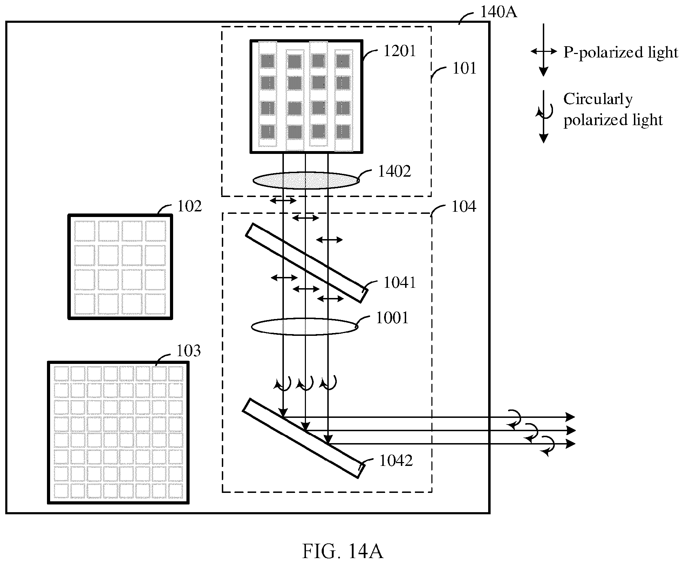

For example, refer to FIG. 14A. FIG. 14A is a schematic diagram of a structure of a possible detection apparatus 140A according to an embodiment of this application. A polarizer 1402 is disposed between a light source 1401 of the detection apparatus 140A and the first beam splitting apparatus 1041, and a first laser signal passing through the polarizer 1403 is in a first polarization direction. When the first laser signal is incident to the first beam splitting apparatus 1041, P-polarized light may be obtained. For example, if the first polarization direction is the same as a direction of the P-polarized light, the first beam splitting apparatus 1041 transmits the first laser signal to obtain the P-polarized light. For another example, if one quadrature component in the first polarization direction is the same as the direction of the P-polarized light, when the first laser signal is incident to the first beam splitting apparatus 1041, the first laser signal is transmitted to obtain the P-polarized light.

Subsequently, the P-polarized light passes through the wave plate 1201 to obtain circularly polarized light, and the circularly polarized light is irradiated to a detection area. A reflected signal from the detection area includes the circularly polarized light. The circularly polarized light passes through the wave plate 1202 to obtain linearly polarized light. When the linearly polarized light passes through 1041, the linearly polarized light is reflected to obtain S-polarized light, and the S-polarized light is provided for the laser detection unit 102.

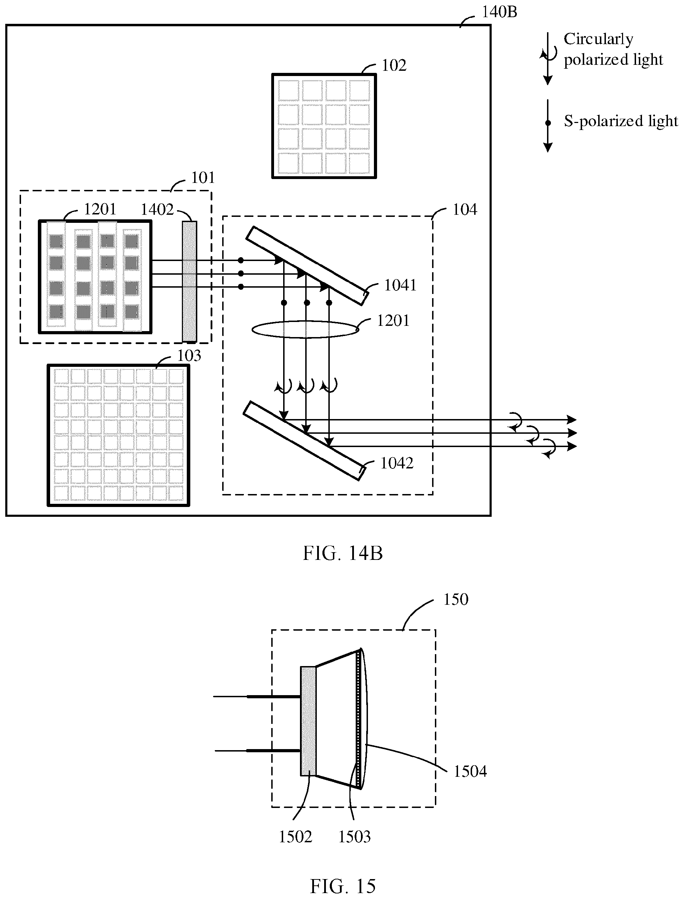

It should be noted that positions of the laser emitting unit and the laser detection unit may be changed. For example, refer to FIG. 14B. FIG. 14B is a schematic diagram of a structure of a possible detection apparatus 140B according to an embodiment of this application. The polarizer 1402 is disposed between the light source 1401 of the detection apparatus 140B and the first beam splitting apparatus 1041, and a first laser signal passing through the polarizer 1403 is in a first polarization direction. When the first laser signal is incident to the first beam splitting apparatus 1041, S-polarized light may be obtained. Subsequently, the S-polarized light passes through the wave plate 1201 to obtain circularly polarized light, and the circularly polarized light is irradiated to a detection area. A reflected signal from the detection area includes the circularly polarized light. The circularly polarized light passes through the wave plate 1202 to obtain linearly polarized light. When the linearly polarized light passes through 1041, the linearly polarized light is reflected to obtain P-polarized light, and the P-polarized light is provided for the laser detection unit 102.

Implementation 2: The laser emitting unit is specifically a flash array light source configured with a first polarization film coating, and a polarization direction of a laser signal passing through the polarization film coating is the first polarization direction. FIG. 15 is a schematic diagram of a structure of a light emitting unit in a possible laser emitting unit according to an embodiment of this application. A luminophor 1502 is configured to generate an optical signal, a lens 1504 (which may also be specifically a filter) is disposed on the luminophor, and a polarization film coating 1503 is plated on the lens 1504. After the optical signal emitted by the luminophor 1502 passes through the polarization film coating 1503, a polarization direction is the first polarization direction.

Polarized light is emitted through the polarization film coating, so that a structure of the detection apparatus is further compact, impact caused by motion, vibration, and the like on fusion detection can be reduced, and stability can be improved.

It should be noted that this is implemented in a manner of coating on a single light emitting unit. In some other implementations, overall coating may be performed on an array light source, or the array light source may be divided into a plurality of light emitting unit groups, and coating is performed on each group.

In a further possible design, a laser detection unit is configured with a second polarization film coating, and the second polarization film coating is configured to transmit a signal whose polarization direction is a preset polarization direction in a first signal. The preset polarization direction is related to a property of a polarization film coating. A polarization direction of an optical signal that can pass through the polarizer may be preset during manufacturing or configuration of the polarization film coating, or an effect of transmitting an optical signal in a polarization direction may be achieved through circuit control.

Optionally, the polarization film coating may be implemented by coating a single detection device, or overall coating may be performed on the laser detection unit, or the laser detection unit may be divided into a plurality of detection device groups, and coating is performed on each group. This application provides two possible implementations.

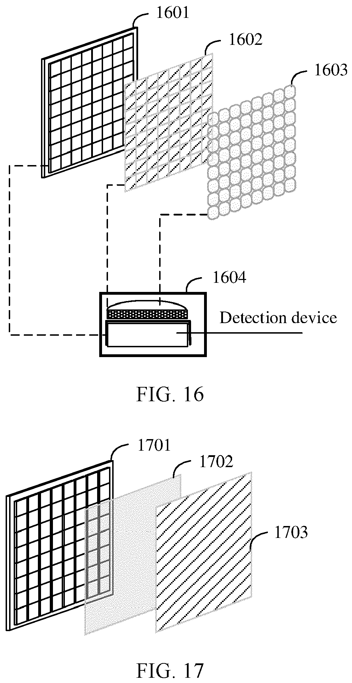

Implementation 1: The polarization film coating is implemented by coating a single detection device. For example, refer to FIG. 16. FIG. 16 shows a possible structure of an array detector according to an embodiment of this application. Two layers of arrays are included in front of a detection device array 1601 of the array detector, and are specifically a detection device array 1602 and a lens array 1603. A polarization film coating 1602 is plated on the lens array 1603. As shown in an area 1604, one detection device is configured with a layer of lens with a polarization film coating. The polarization film coating 1602 may transmit a signal whose polarization direction is a preset polarization direction. For example, the polarization film coating may transmit P-polarized light (or S-polarized light) from a first beam splitting apparatus, thereby achieving a light filtering effect and improving signal validity.

It should be noted that the foregoing lens is merely used as a carrier of a film coating for description. During specific implementation, the polarization film coating may be configured on another carrier.

In a possible implementation process, the lens array 1603 is configured to filter light whose wavelength range is different from a wavelength range of an emitted laser signal, to improve signal validity. For example, refer to FIG. 12B. An example in which the second beam splitting apparatus 1042 is a dichroscope and the first beam splitting apparatus 1041 is a polarization beam splitter is used, and a possible case is as follows: The image detection unit 103 is a visible light camera, and the laser emitting unit 101 emits infrared light. The emitted infrared light passes through the first beam splitting apparatus to obtain P-polarized light, and the dichroscope 1042 is configured to reflect infrared light and transmit visible light. When receiving an echo signal, the dichroscope reflects most of the infrared light to a direction of the first beam splitting apparatus, and transmits most of the visible light to the visible light camera 103. However, it is difficult for the dichroscope to achieve an effect of total reflection (or total transmission) of light within a wavelength range, that is, a part of visible light is also reflected by the dichroscope 1042 to the wave plate 1201. Circularly polarized light may exist in the visible light, and the circularly polarized light in the visible light passes through the wave plate 1201 to obtain linearly polarized light, so that the linearly polarized light is provided for the laser detection unit 102 by the first beam splitting apparatus 1041. The visible light may cause interference to signal detection of the laser detection unit 102, for example, cause missing detection of a laser signal or a false alarm of a signal. However, the lens array is disposed in the image detection unit 102, so that light in a visible light band can be filtered, and light in an infrared light band can be transmitted, thereby improving signal validity.

Implementation 2: Overall coating is performed on the laser detection unit. FIG. 17 is a schematic diagram of a structure of another possible laser detection unit according to an embodiment of this application. It can be learned that the laser detection unit includes three layers: a detection device array 1701, a lens 1702, and a polarization film coating layer 1703. The polarization film coating layer 1703 is plated on the lens 1702 to transmit P-polarized light (or S-polarized light) from a first beam splitting apparatus, thereby achieving a light filtering effect and improving signal validity.

It should be noted that the foregoing lens is merely used as a carrier of a film coating for description. During specific implementation, the polarization film coating may be configured on another carrier, for example, directly plated on a surface of a receiving unit.

In some possible implementation processes, the lens array 1702 may be configured to filter light whose wavelength range is different from a wavelength range of an emitted laser signal, to improve signal validity.

Alternatively, in addition to the film coating, a polarizer may be further used to achieve polarization light filtering effect. The polarization film coating layer 1703 shown in FIG. 17 may also be considered as a polarizer layer, and can achieve similar effect. Details are not described herein again.

In a still further possible design, a detection apparatus further includes an optical device, for example, includes at least one of a lens, a beam shaper, a filter, a light uniformizer, and a collimation apparatus. This application provides the following several possible implementations.

Implementation 1: The detection apparatus further includes a first optical device, and the first optical device is disposed between a beam splitting apparatus and a detection area. The first optical device is configured to transmit light within a third wavelength range, and the third wavelength range includes a wavelength range of a first laser signal and an operating wavelength range of an image detection unit. Optionally, the optical device may be specifically a lens or a filter. The operating wavelength range of the image detection unit is used to indicate a wavelength range of a signal to which the image detection unit is sensitive, or a wavelength range in which a response can be generated. For example, an operating wavelength range of a visible light camera is a wavelength range of visible light, and an operating wavelength range of a short-wave near-infrared camera is approximately 400 nm to 1700 nm (only used as an example).

For example, in a scenario in which a laser emitting unit responds to infrared light, and the image detection unit responds to the visible light, the first optical device can pass through at least a band of the infrared light and a band of the visible light, and can be reused during transceiving.

The optical device that can be reused during transceiving is disposed, to reuse optical systems of the laser emitting unit, a laser detection unit, and the image detection unit, to reduce a volume of the detection apparatus and improve compactness.

During specific implementation, the first optical device may include a wide-spectrum optical device. The wide spectrum indicates that an optical signal with a large wavelength range can pass through the optical device. In this embodiment of this application, a band through which the wide-spectrum optical device can pass includes at least a wavelength range and an operating wavelength range of an emitted signal. Further optionally, the band through which the wide-spectrum optical device can pass may further include an operating wavelength range of the laser detection unit.

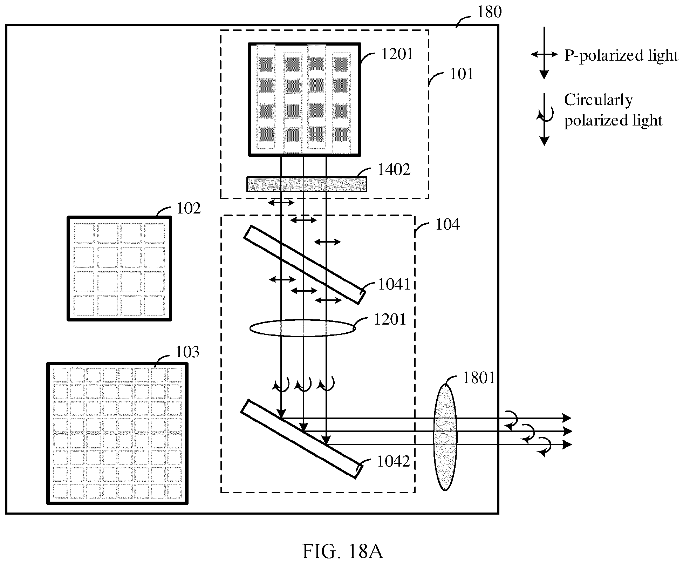

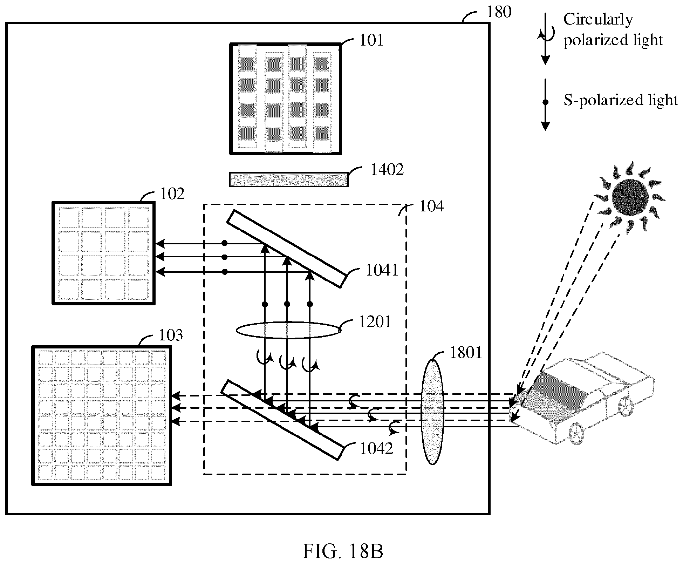

This application provides a possible case. FIG. 18A is a schematic diagram of a possible detection apparatus 180 emitting a laser signal according to an embodiment of this application. FIG. 18B is a schematic diagram of the possible detection apparatus 180 receiving a signal. The detection apparatus 180 includes the laser emitting unit 101, the laser detection unit 102, the image detection unit 103, the beam splitting apparatus 104, the wave plate (wave plate) 1201, the polarizer 1402, and a wide-spectrum optical device 1801. The beam splitting apparatus 104 includes the first beam splitting apparatus 1041 and the second beam splitting apparatus 1042. Optionally, the detection apparatus 120 may further include a controller (not shown in the figure).

It can be learned that a laser signal emitted by the laser emitting unit 101 may be irradiated to the detection area through the wide-spectrum optical device 1801, and an optical signal from the detection area may be provided for the beam splitting apparatus 104 through the wide-spectrum optical device 1801.

Implementation 2: The detection apparatus further includes at least one of a second optical device, a third optical device, and a fourth optical device. The second optical device is disposed between the laser emitting unit and the beam splitting apparatus; the third optical device is disposed between the laser detection unit and the beam splitting apparatus; and/or the fourth optical device is disposed between the image detection unit and the beam splitting apparatus.

The second optical device can be configured to transmit a laser signal, and the second optical device may also be referred to as an emission optical system. For example, if the laser emitting unit emits infrared light, the laser emitting unit may be referred to as an infrared emission optical system. Optionally, the second optical device may include a lens, configured to transmit a laser signal. Alternatively, optionally, the second optical device may include a filter, configured to enable an emitted laser signal to be a signal within a preset wavelength range. Alternatively, optionally, the second optical device may further include a beam shaper. For example, the second optical device may include a collimation apparatus, configured to adjust a direction, a shape, and the like of a laser signal.

The third optical device is configured to receive a reflected signal obtained based on the emitted laser signal. The third optical device may also be referred to as a receiving optical system. For example, if the third optical device is configured to receive echo light returned based on emitted infrared light, the third optical device may be referred to as an infrared receiving optical system. Optionally, the third optical device may include a lens, configured to transmit an optical signal. Alternatively, optionally, the third optical device includes a filter, configured to filter stray light. Alternatively, optionally, the third optical device includes a light uniformizer, and the light uniformizer is configured to even a returned optical signal, to prevent energy of a first signal from being excessively concentrated in an area.

The fourth optical device is configured to transmit an optical signal required by the image detection unit, and the fourth optical device may also be referred to as a receiving optical system. For example, if the fourth optical device is configured to receive visible light, the fourth optical device may also be referred to as a visible light receiving optical system. Optionally, the fourth optical device may include a lens, configured to transmit an optical signal. Alternatively, optionally, the fourth optical device includes a filter, configured to filter stray light.

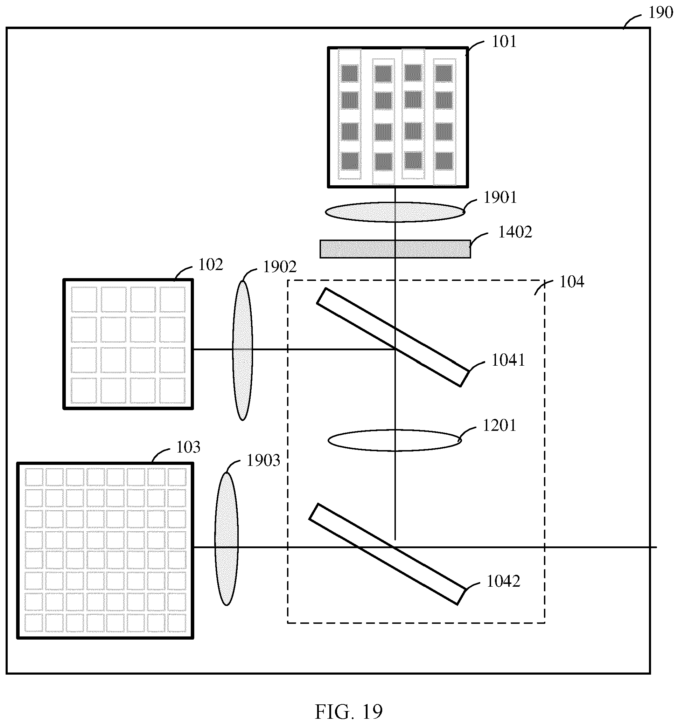

This application provides a possible case. FIG. 19 is a schematic diagram of a structure of a possible detection apparatus 190 according to an embodiment of this application. The detection apparatus 190 includes the laser emitting unit 101, the laser detection unit 102, the image detection unit 103, the beam splitting apparatus 104, the wave plate (wave plate) 1201, the polarizer 1402, a second optical device 1901, a third optical device 1902, and a fourth optical device 1904. The beam splitting apparatus 104 includes the first beam splitting apparatus 1041 and the second beam splitting apparatus 1042. Optionally, the detection apparatus 120 may further include a controller (not shown in the figure).

The second optical device 1901 can be configured to transmit a laser signal, the third optical device 1902 is configured to filter stray light in an optical signal transmitted to the laser detection unit 120, and the fourth optical device 1903 is configured to transmit an optical signal required by the image detection unit 103.

Implementation 3: The detection apparatus further includes a fifth optical device and a sixth optical device. The fifth optical device is disposed between the first beam splitting apparatus and the second beam splitting apparatus, and the sixth optical device is disposed between the image detection unit and the second beam splitting apparatus.

The fifth optical device may be configured to transmit the laser signal and/or filter the stray light, and the fifth optical device is configured to transmit the optical signal required by the image detection unit. It may be understood that the optical signal emitted by the laser emitting unit and an optical signal required by the laser detection unit have a same wavelength. Therefore, the fifth optical device can be reused during laser transceiving, to reduce a volume of the detection apparatus and improve compactness. Optionally, the fifth optical device may include a lens, configured to transmit the optical signal. Alternatively, optionally, the fifth optical device may include a filter, configured to filter the stray light.

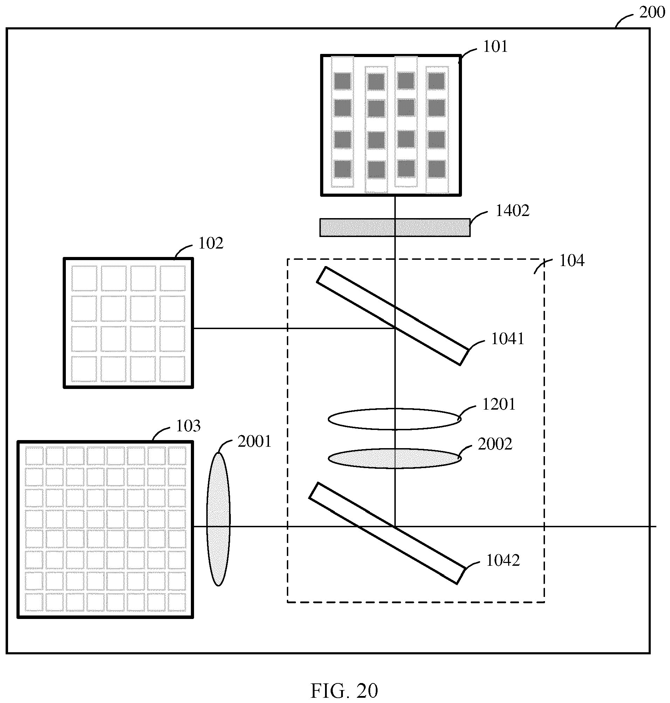

The sixth optical device is configured to transmit a signal required by the image detection unit, and the sixth optical device may also be referred to as a receiving optical system. For example, if the sixth optical device is configured to receive visible light, the sixth optical device may also be referred to as a visible light receiving optical system. Optionally, the sixth optical device may include a lens, configured to transmit the optical signal. Alternatively, optionally, the sixth optical device includes a filter, configured to filter the stray light. This application provides a possible case. FIG. 20 is a schematic diagram of a structure of a possible detection apparatus 200 according to an embodiment of this application. The detection apparatus 200 includes the laser emitting unit 101, the laser detection unit 102, the image detection unit 103, the beam splitting apparatus 104, the wave plate (wave plate) 1201, the polarizer 1402, a fifth optical device 2001, and a sixth optical device 2002. The beam splitting apparatus 104 includes the first beam splitting apparatus 1041 and the second beam splitting apparatus 1042.

Optionally, positions of the fifth optical device 2001 and the wave plate 1201 in FIG. 20 may be exchanged, and positions of other components may also be changed. For a possible change case, refer to the foregoing design. Details are not described herein again.

The fifth optical device 2001 may be configured to transmit the laser signal and/or filter the stray light, and the sixth optical device 2002 is configured to transmit the optical signal required by the image detection unit 103.

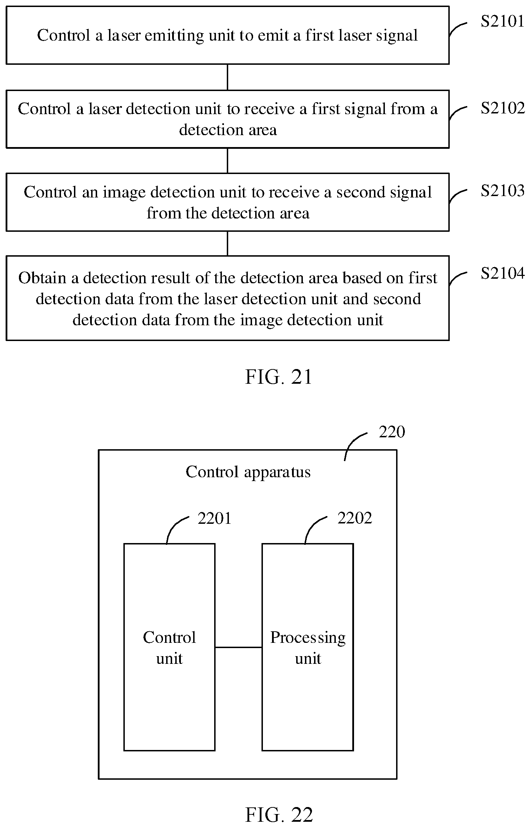

FIG. 21 is a schematic flowchart of a control method according to an embodiment of this application. Optionally, the method may be implemented based on the foregoing detection apparatus, for example, the detection apparatus shown in FIG. 1A, FIG. 7A (or FIG. 7B), FIG. 9, FIG. 10, FIG. 12A (or FIG. 12B), FIG. 14A (or FIG. 14B), FIG. 18A (or FIG. 18B), FIG. 19, or FIG. 20. The control method includes at least the following steps:
Step S2101: Control a laser emitting unit to emit a first laser signal.

Specifically, step S2101 may be implemented by using a control apparatus. Optionally, the control apparatus may be included in the foregoing detection apparatus, or may be deployed outside the detection apparatus. For example, the control apparatus may be the controller 106 in the detection apparatus 10 shown in FIG. 1A, FIG. 1B, or FIG. 1C, or may be a module, for example, a chip or an integrated circuit, in the controller 106. For another example, the detection apparatus is a vehicle-mounted radar. The controller may be an MDC in a vehicle, and is configured to control the vehicle-mounted radar to operate.

The control apparatus may include one or more of the following apparatuses: a controller, a processor, a field programmable gate array, an application processor (application processor, AP), a modem processor, a graphics processing unit (graphics processing unit, GPU), an image signal processor (image signal processor, ISP), a controller, a digital signal processor (digital signal processor, DSP), a neural-network processing unit (neural-network processing unit, NPU), or the like. Optionally, the laser emitting unit is a flash light source, and the flash light source can irradiate one field of view at a time, and can achieve an effect of surface irradiation. Optionally, the laser emitting unit may be an array light source including a plurality of light emitting units, or may be a flood light source including one light emitting unit.

The controller may send a first control signal to the laser emitting unit, and the laser emitting unit generates a laser signal in response to the first control signal.

Step S2102: Control a laser detection unit to receive a first signal from a detection area.

The first signal is provided for the laser detection unit through a beam splitting apparatus, and the first signal includes a reflected signal corresponding to the first laser signal.

Specifically, the beam splitting apparatus may provide the first signal from the detection area (which may be specifically from a first target object in the detection area) for the laser detection unit. The first signal includes the reflected signal corresponding to the first laser signal.

Optionally, the beam splitting apparatus may include a first beam splitting apparatus and a second beam splitting apparatus. The second beam splitting apparatus is configured to split an optical signal from the detection area into the first signal and a second signal. The first beam splitting apparatus is configured to provide the first signal for the laser detection unit.

In a possible design, the second beam splitting apparatus may be one or a combination of a dichroscope (dichroscope), a semi-transmissive semi-reflective beam splitter (or referred to as a semi-transmissive semi-reflective mirror), or a medium beam splitter (one of a dielectric beam splitter, a metal film beam splitter, and the like).

In yet another possible design, the first beam splitting apparatus may be one or a combination of a polarization beam splitter (polarization beam splitter, PBS) or a semi-transmissive semi-reflective beam splitter (or referred to as a semi-transmissive semi-reflective mirror). Further optionally, the beam splitting apparatus further includes a wave plate configured to change a polarization direction of an optical signal.

Specifically, step S2102 may be implemented by using the control apparatus. Optionally, the control apparatus may control the laser detection unit by using a control signal. For example, the control apparatus generates a second control signal. The second control signal is used by the laser detection unit to start or stop receiving the first signal from the detection area. Further, the control apparatus may further generate threshold indication information or the like, to indicate a threshold of a signal to which the laser detection unit can generate a response.

In some embodiments, a polarizer on the laser detection unit may transmit, through circuit control, an optical signal in a preset polarization direction. In this case, the control apparatus may generate a control signal to indicate the preset polarization direction.

Step S2103: Control an image detection unit to receive the second signal from the detection area.

The second signal is provided for the image detection unit through the beam splitting apparatus.

Optionally, the beam splitting apparatus provides the second signal for the image detection unit and provides the first signal for the laser detection unit. The first signal and the second signal are coaxial.

Specifically, step S2103 may be implemented by using the control apparatus. The control apparatus may control the image detection unit by using a control signal. For example, the control apparatus generates a third control signal. The third control signal is used by the image detection unit to start or stop receiving the second signal from the detection area.

In some embodiments, a polarizer on the image detection unit may transmit, through circuit control, the optical signal in the preset polarization direction. In this case, the control apparatus may further generate a control signal to indicate the preset polarization direction.

Optionally, the control method shown in FIG. 21 may further include step S2104. Details are as follows:
Step S2104: Obtain a detection result of the detection area based on first detection data from the laser detection unit and second detection data from the image detection unit.

Specifically, step S2104 may be performed by the control apparatus, or may be performed by another control apparatus different from the control apparatus, for example, an external processing apparatus. For example, steps S2101 to S2103 may be performed by a processor in the detection apparatus, and step S2104 may be performed by a processor in a terminal in which the detection apparatus is located, for example, the MDC in the vehicle.

Optionally, when the control apparatus is included in the detection apparatus, the control apparatus, the laser emitting unit, the image detection unit, and the laser detection unit may be interconnected through a bus or interconnected in a wireless manner, so that the control apparatus can receive the first detection data and the second detection data.

Alternatively, the control apparatus may be integrated into the image detection unit. In this case, the control apparatus receives the first detection data from the laser detection unit, and obtains the detection result of the detection area based on the first detection data and the second detection data from the image detection unit.

Similarly, the control apparatus may also be integrated into the image detection unit.

Specifically, the laser detection unit may obtain an electrical signal based on the first signal. The first detection data may include the electrical signal or further data obtained after the electrical signal is processed.

The image detection unit may obtain pixel information (or an electrical signal) based on the second signal. The second detection data may include the pixel information (or the electrical signal) or further data obtained after the pixel information (or the electrical signal) is processed.

The control apparatus fuses the first detection data and the second detection data to obtain the detection result of the detection area. In a possible design, the control apparatus may obtain point cloud information of the detection area based on the first detection data, obtain image information of the detection area based on the second detection data, and obtain the detection result of the detection area based on the point cloud information and the image information.

The detection result of the detection area may be a high-resolution fused image of the detection area, or a three-dimensional (3-dimensional, 3D) image of the detection area. Based on the detection result, a distance of an object in the detection area may be determined, and object recognition, analysis, and the like may be performed by using a high-resolution pixel.

For example, the first signal and the second signal are specifically from the first target object in the detection area, and the detection result may be used to describe one or more pieces of information of a color, a distance relative to the detection apparatus, a speed, a contour, a pattern, or the like of the first target object. The detection result may be further used to identify or analyze the first target object.

It can be learned that, according to the control method shown in FIG. 21, the detection apparatus may be controlled to detect the detection area, that is, an image of the detection area may be obtained, and the point cloud information of the detection area may be further obtained. Further, a fusion detection result may be obtained based on the image and the point cloud information of the detection area. The detection apparatus includes the laser emitting unit, the laser detection unit, and the image detection unit, and the device has high compactness and good stability. Further, in this embodiment of this application, optical paths of the laser signal, the first signal, and the second signal can be coaxial through the beam splitting apparatus. The image detection unit can correspondingly receive a laser signal reflected by the detection area irradiated by the laser emitting unit, thereby improving accuracy of the detection result. In addition, the image detection unit and the laser detection unit synchronously obtain the point cloud information and the image information of the detection area, to facilitate subsequent fusion of the point cloud information and the image information that are of a lidar without performing complex calibration and registration, thereby reducing computational complexity, and improving resolution of the detection result.

The foregoing describes in detail the method in this embodiment of this application. The following provides possible control apparatuses in embodiments of this application.

FIG. 22 is a schematic diagram of a structure of a control apparatus 220 according to an embodiment of this application. The detection apparatus may include a control unit 2201. Further optionally, the control apparatus further includes a processing unit 2202, or the processing unit 2202 is located outside the control apparatus. The control apparatus 220 is configured to implement the foregoing control method, for example, may be configured to implement the control method shown in FIG. 21.

It should be noted that for implementation of each unit, refer to the corresponding description in the method embodiment shown in FIG. 21. Optionally, the control apparatus 220 may be a controller in the foregoing detection apparatus, or one or more modules (for example, chips or integrated circuits) in the controller.

In a possible implementation, the control unit 2201 is configured to control a laser emitting unit to emit a first laser signal. The first laser signal is transmitted to a detection area through a beam splitting apparatus.

The control unit 2201 is further configured to control a laser detection unit to receive a first signal from the detection area. The first signal is provided for the laser detection unit through the beam splitting apparatus, and the first signal includes a reflected signal corresponding to the first laser signal.

The control unit 2201 is further configured to control an image detection unit to perform imaging by using a second signal from the detection area. The second signal is provided for the image detection unit through the beam splitting apparatus.

In a possible implementation, the processing unit 2202 is configured to:
obtain point cloud information of the detection area based on first detection data from the laser detection unit;
obtain image information of the detection area based on second detection data from the image detection unit; and
fuse the point cloud information and the image information to obtain a detection result of the detection area.

For specific implementation of the foregoing units, refer to detailed descriptions in the method embodiment shown in FIG. 21. Details are not described herein again.

It should be understood that, in the control apparatus 220, division into a plurality of units or modules is merely logical division based on functions, and is not intended to limit a specific structure of the apparatus. During specific implementation, some function modules may be subdivided into more fine function modules, and some function modules may be combined into one function module. However, regardless of whether the function modules are subdivided or combined, general procedures in a process of implementing the control method are the same. For example, the control unit in the control apparatus 220 may be subdivided into a first control unit and a second control unit. The first control unit is configured to control the laser emitting unit and the laser detection unit, and the second control unit is configured to control the image detection unit. Usually, each unit corresponds to program code (or a program instruction). When the program code corresponding to the unit is run on at least one processor, the unit executes a corresponding procedure to implement a corresponding function.

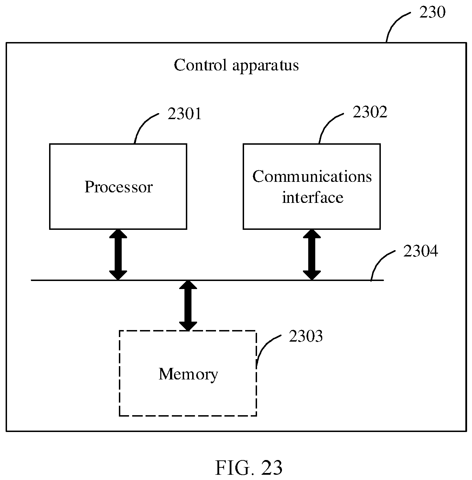

FIG. 23 is a schematic diagram of a structure of a control apparatus 230 according to an embodiment of this application. The controller 230 may include at least one processor 2301 and a communications interface 2302. Optionally, the communications apparatus may further include at least one memory 2303. Further, the memory 2303 may be coupled to the processor 2301. Specifically, the control apparatus 230 may be a chip or an integrated circuit.

Optionally, the detection apparatus 230 may further include a bus 2304. One or more of the at least one processor 2301, the communications interface 2302, and the at least one memory 2303 may be connected through the bus 2304.

The processor 2301 is a module that performs an arithmetic operation and/or a logic operation, and may be specifically one or a combination of an analog-to-digital converter (analog-to-digital converter, ADC), a digital signal processor (digital signal processor, DSP), a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), and a microcontroller unit (Microcontroller Unit, MCU).

The communications interface 2302 may be configured to provide an information input or output for the at least one processor. Alternatively, the communications interface 2302 may be configured to receive data sent from the outside and/or send data to the outside, and may be a wired link interface including an Ethernet cable or the like, or may be a wireless link (Wi-Fi, Bluetooth, universal wireless transmission, an in-vehicle short-distance communications technology, or the like) interface. Optionally, the communications interface 2302 may further include a transmitter (for example, a radio frequency transmitter or an antenna), a receiver, or the like coupled to the interface.

The memory 2303 is configured to provide storage space, and the storage space may store data such as an operating system and a computer program. The memory 2303 may be one or a combination of a cache (cache), a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like. The RAM may also be one or a combination of a static random access memory (static random access memory, SRAM), a dynamic random access memory (dynamic random access memory, DRAM), and the like.

The processor 2301 in the control apparatus 230 is configured to read the computer program stored in the memory, and is configured to perform the foregoing control method, for example, one or more steps of the detection method described in FIG. 21.

An embodiment of this application further provides a fusion detection system. The fusion detection system includes a detection apparatus and a processing apparatus. The detection apparatus may be the detection apparatus described in the embodiment of FIG. 1A, FIG. 7A (or FIG. 7B), FIG. 9, FIG. 10, FIG. 12A (or FIG. 12B), FIG. 14A (or FIG. 14B), FIG. 18A (or FIG. 18B), FIG. 19, or FIG. 20. The processing apparatus is configured to execute a computer program to fuse first detection data and second detection data, to obtain a detection result of a detection area. The first detection data comes from a laser detection unit of the detection apparatus, and the second detection data comes from an image detection unit of the detection apparatus. A person skilled in the art may understand that, in the fusion detection system, step S2104 involved in the foregoing method embodiment is performed by the processing apparatus other than the detection apparatus.

An embodiment of this application further provides a terminal. The terminal includes the foregoing detection apparatus, for example, the detection apparatus shown in FIG. 1A, FIG. 7A (or FIG. 7B), FIG. 9, FIG. 10, FIG. 12A (or FIG. 12B), FIG. 14A (or FIG. 14B), FIG. 18A (or FIG. 18B), FIG. 19, or FIG. 20.

Optionally, the terminal may be a transportation tool or an intelligent terminal such as a vehicle, an uncrewed aerial vehicle, a roadside unit, an intersection radar, or a robot.

An embodiment of this application further provides a computer-readable storage medium. The computer-readable storage medium stores a computer program. When the computer program is run on one or more processors, the method in the embodiment shown in FIG. 21 is implemented.

An embodiment of this application further provides a computer program product. When the computer program product runs on one or more processors, the method in the embodiment shown in FIG. 21 is implemented.

An embodiment of this application further provides a chip system. The chip system includes a communications interface and at least one processor. The communications interface is configured to provide an information input/output for the at least one processor. The processor is configured to invoke computer instructions from the communications interface, to implement the method in the embodiment shown in FIG. 21. Further, the at least one processor may be one or a combination of a plurality of processing modules such as an ADC, a DSP, a CPU, a GPU, an MPU, an ASIC, an FPGA, a CPLD, a coprocessor (assisting a central processing unit in completing corresponding processing and application), and an MCU.

According to the context, the term "when" used in the foregoing embodiments may be interpreted as a meaning of "if", "after", "in response to determining", or "in response to detecting".

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

## Claims

1. A detection apparatus, wherein the detection apparatus comprises a laser emitting unit, a laser detection unit, a beam splitting apparatus, and an image detection unit, wherein
the laser emitting unit is configured to emit a laser signal, wherein a first laser signal from the laser emitting unit is transmitted to a detection area through the beam splitting apparatus;
the laser detection unit is configured to receive a first signal from the detection area through the beam splitting apparatus, wherein the first signal comprises a reflected signal corresponding to the first laser signal;
the beam splitting apparatus is further configured to provide a second signal from the detection area for the image detection unit; and
the image detection unit is configured to perform imaging by using the second signal.

2. The apparatus according to claim 1, wherein the laser emitting unit comprises a flash array light source.

3. The apparatus according to claim 1 or 2, wherein the beam splitting apparatus comprises a first beam splitting apparatus and a second beam splitting apparatus, wherein
the first beam splitting apparatus is configured to transmit the first laser signal to the second beam splitting apparatus;
the second beam splitting apparatus is configured to transmit the first laser signal to the detection area;
the second beam splitting apparatus is further configured to split an optical signal from the detection area into the first signal and the second signal, provide the second signal for the image detection unit, and provide the first signal for the first beam splitting apparatus; and
the first beam splitting apparatus is further configured to provide the first signal for the laser detection unit.

4. The apparatus according to claim 3, wherein the first beam splitting apparatus comprises a polarization beam splitter or a semi-transmissive semi-reflective beam splitter.

5. The apparatus according to claim 3 or 4, wherein a wavelength range of the first laser signal falls inside a first wavelength range, the first signal comprises an optical signal whose wavelength range falls inside the first wavelength range, the second signal comprises an optical signal whose wavelength range falls inside a second wavelength range, and the first wavelength range is different from the second wavelength range.

6. The apparatus according to any one of claims 3 to 5, wherein the second beam splitting apparatus comprises a dichroic beam splitter or a semi-transmissive semi-reflective beam splitter.

7. The apparatus according to any one of claims 3 to 6, wherein the first beam splitting apparatus comprises a polarization beam splitter and a quarter-wave plate, and the quarter-wave plate is disposed between the polarization beam splitter and the second beam splitting apparatus.

8. The apparatus according to any one of claims 1 to 7, wherein a polarizer is disposed between the laser emitting unit and the beam splitting apparatus, and a polarization direction of a laser signal passing through the polarizer is a first polarization direction.

9. The apparatus according to any one of claims 1 to 7, wherein the laser emitting unit is configured with a first polarization film coating, and a polarization direction of a laser signal passing through the polarization film coating is a first polarization direction.

10. The apparatus according to any one of claims 1 to 9, wherein the laser detection unit is configured with a second polarization film coating, and the second polarization film coating is configured to transmit a signal whose polarization direction is a preset polarization direction in the first signal.

11. The apparatus according to any one of claims 1 to 10, wherein the image detection unit comprises at least one of a color camera, a grayscale camera, or a multidimensional camera, and the multidimensional camera comprises at least one of a grayscale polarization camera, a color polarization camera, and a multispectral polarization camera.

12. The apparatus according to any one of claims 1 to 11, wherein the apparatus further comprises a controller, and the controller is configured to control at least one of the laser emitting unit, the image detection unit, or the laser detection unit.

13. The apparatus according to any one of claims 1 to 12, wherein the apparatus further comprises a first lens, the first lens is disposed between the beam splitting apparatus and a target area, the first lens is configured to transmit light within a third wavelength range, and the third wavelength range comprises the wavelength range of the first laser signal and an operating wavelength range of the image detection unit.

14. The apparatus according to any one of claims 1 to 12, wherein the apparatus further comprises at least one of a second lens, a third lens, and a fourth lens, wherein
the second lens is disposed between the laser emitting unit and the beam splitting apparatus;
the third lens is disposed between the laser detection unit and the beam splitting apparatus; and/or
the fourth lens is disposed between the image detection unit and the beam splitting apparatus.

15. The apparatus according to any one of claims 3 to 7, wherein the apparatus further comprises a fifth lens and a sixth lens, wherein
the fifth lens is disposed between the first beam splitting apparatus and the second beam splitting apparatus; and
the sixth lens is disposed between the image detection unit and the second beam splitting apparatus.

16. A control method, wherein the method comprises:
controlling a laser emitting unit to emit a first laser signal, wherein the first laser signal is transmitted to a detection area through a beam splitting apparatus;
controlling a laser detection unit to receive a first signal from the detection area, wherein the first signal is provided for the laser detection unit through the beam splitting apparatus, and the first signal comprises a reflected signal corresponding to the first laser signal; and
controlling an image detection unit to receive a second signal from the detection area, wherein the second signal is provided for the image detection unit through the beam splitting apparatus.

17. The method according to claim 16, wherein the method further comprises:
obtaining point cloud information of the detection area based on first detection data from the laser detection unit;
obtaining image information of the detection area based on second detection data from the image detection unit; and
fusing the point cloud information and the image information to obtain a detection result of the detection area.

18. The method according to claim 16 or 17, wherein the beam splitting apparatus comprises a first beam splitting apparatus and a second beam splitting apparatus;
the first laser signal is transmitted to the detection area through the first beam splitting apparatus and the second beam splitting apparatus; and
an optical signal from the detection area is split into the first signal and the second signal through the second beam splitting apparatus, the first signal is provided for the laser detection unit through the first beam splitting apparatus, and the second signal is provided for the image detection unit.

19. The method according to claim 18, wherein the first beam splitting apparatus comprises a polarization beam splitter or a semi-transmissive semi-reflective beam splitter.

20. The method according to claim 18 or 19, wherein the second beam splitting apparatus comprises a dichroic beam splitter or a semi-transmissive semi-reflective beam splitter.

21. The method according to any one of claims 18 to 20, wherein the first beam splitting apparatus comprises a polarization beam splitter and a quarter-wave plate, and the quarter-wave plate is disposed between the polarization beam splitter and the second beam splitting apparatus.

22. The method according to any one of claims 16 to 21, wherein the laser emitting unit comprises a flash array light source.

23. A control apparatus, comprising at least one processor and a communications interface, the communications interface is configured to provide instructions or a data input and/or output for the processor, and the at least one processor is configured to execute a computer program to implement the method according to any one of claims 16 to 22.

24. A fusion detection system, wherein the fusion detection system comprises a processing apparatus and the detection apparatus according to any one of claims 1 to 15, and the processing apparatus is configured to execute a computer program to fuse first detection data and second detection data, to obtain a detection result of a detection area, wherein the first detection data comes from a laser detection unit of the detection apparatus, and the second detection data comes from an image detection unit of the detection apparatus.

25. A terminal, wherein the terminal comprises the detection apparatus according to any one of claims 1 to 15.

26. The terminal according to claim 25, wherein the terminal is a vehicle, an uncrewed aerial vehicle, or a robot.

27. A computer-readable storage medium, wherein the computer-readable storage medium stores a computer program, and when the computer program is run on one or more processors, the method according to any one of claims 16 to 22 is performed.
